Europäisches Patentamt

European Patent Office

Office européen des brevets

(19)

(11) EP 1 508 861 A1

(12) **EUROPEAN PATENT APPLICATION**
published in accordance with Art. 158(3) EPC

(43) Date of publication:
23.02.2005 Bulletin 2005/08

(51) Int Cl.7: **G06F 17/30**, G09B 19/00

(21) Application number: 02756018.4

(22) Date of filing: 28.05.2002

(86) International application number:
PCT/RU2002/000258

(87) International publication number:
WO 2003/100659 (04.12.2003 Gazette 2003/49)

(84) Designated Contracting States:
**AT BE CH CY DE DK ES FI FR GB GR IE IT LI LU MC NL PT SE TR**
Designated Extension States:
**AL LT LV MK RO SI**

(71) Applicants:
• **Nasypny, Vladimir Vladimirovich**
**Moscow, 115573 (RU)**
• **Nasypnaya, Galina Anatolievna**
**Moscow, 115573 (RU)**

(72) Inventors:
• **Nasypny, Vladimir Vladimirovich**
**Moscow, 115573 (RU)**
• **Nasypnaya, Galina Anatolievna**
**Moscow, 115573 (RU)**

(74) Representative: **Herbjörnsen, Rut et al**
**Albihns Stockholm AB**
**P.O. Box 5581**
**114 85 Stockholm (SE)**

(54) **METHOD FOR SYNTHESISING A SELF-LEARNING SYSTEM FOR KNOWLEDGE ACQUISITION FOR TEXT-RETRIEVAL SYSTEMS**

(57)   The invention relates to computer science, information-search and intelligent systems, and can be used in developing information-search and other information and intelligent systems that operate on the basis of Internet. The invention provides the possibility of automatic creation of knowledge by extraction of knowledge from textual documents in electronic form in different languages; intelligent processing of textual information and users' requests to extract knowledge in any foreign language. The claimed method provides a mechanism of self-learning in the form of a stochastically indexed system of artifical intelligence, providing automatic instruction of the system in rules of grammatical and semantic analysis. The method includes creating databases of stochastically indexed dictionaries, tables of indices of linguistic texts and knowledge bases of morphological analysis; performing morphological and syntactical analysis, and also stochastic indexing of textual documents in respect to a given theme from the search system in a given language, and creating knowledge base of syntactical analysis. Stochastically indexed textual documents pertaining to the given theme are subjected to semantic analysis, and knowledge bases of semantic analysis. A user's request is compiled and transformed, in the stochastically indexed form, into a plurality of new requests that are equivalent to the original request; and stochastically indexed fragments of textual documents that comprise all word combinations of the transformed request are selected. A stochastically indexed structure is generated from the selected documents and basing on said structure by means of logical conclusion a brief reply of the system is generated. Relevancy of the obtained brief reply is checked by generating an interrogative sentence based on said reply, and by comparing said sentence with the request. When the user's request is identical to the obtained interrogative sentence, the decision is made that the brief reply of the system is identical to the request, and the reply is submitted to the user.

Fig. 1

**Description**

Field of the Invention

The invention relates to computer science, information-search and intelligent systems.

The invention can be suitably used in developing information-search and other information and intelligent systems that operate on the basis of Internet.

Background of the Invention

The Internet has presently accumulated a huge amount of permanently updated information relating to numerous subject-matters and topics. But the access thereto by the multi-million user population is complicated. The cause is an insufficient efficiency of current techniques for data retrieval in search systems. Known are data retrieval methods for Yandex, Yahoo, Rambler search systems. These known methods output the textual documents requested by Internet users.

The main drawbacks of the known data retrieval methods are

- complexity of request formalized languages;
- lack of a mechanism for semantic analysis of textual documents contents and for ascertaining their conformance with the asked questions;
- impossibility of exact determination, in a search document, of the presence of information indicated in a user request, and impossibility of extraction of particular information and knowledge needed by a user from voluminous information sources.

Due to the above-mentioned drawbacks, when information search procedures are carried out, along with useful information, a lot of redundant "noise" information is outputted, which cannot be easily filtered out by existing search systems. This considerably increases the time required to search for necessary information, overloads channels and servers of a search system due to the transmitting and processing of unnecessary information.

The main difficulty consists in that a user, having sent a request to a search system, gets great amounts of information that often do not contain required data. There emerges the necessity to review every received document to ascertain whether it contains the needed data. This leads to unnecessary waste of time and mental efforts. Impossibility to acquire, in real time, from vast Internet's data arrays any particular data and knowledge required by a user to solve various problems, significant reduces both information value and efficiency of the search system.

Known is a method for extracting knowledge and data by user's request from databases, which is implemented in an intelligent information-logical computing system described in monograph: Nasypny V.V., Development of a theory of open systems design on the basis of artificial intelligence information technology, Moscow, 1994 (pp. 85 - 112). The method is based on a stochastic information technology and provides an efficient knowledge search and processing in real time of knowledge using a logical conclusion. This advantage is provided by an approach, wherein, as opposed to existing knowledge processing methods used in conventional artificial intelligence systems, provided is a linear relationship between a search time and a logical processing, on the one side, and an amount of knowledge required to prepare a reply, on the other side. However, said method does not allow to extract the knowledge from textual documents, because the method is directed to processing of formalized information from knowledge bases, which processing is carried out by experts and engineers with respect to the knowledge involved. Due to this drawback, said method cannot be used for extracting knowledge from textual documents in existing information search systems.

Also known is a method for extracting knowledge from textual documents described in monograph: Nasypny V.V., Nasypnaya G. A., Construction of an intelligent information search system, Moscow, Promethey-Publisher, 2001. Said method is based on a stochastic intelligent information technology that allows morphological, syntactical and semantic analysis of large amounts of textual information, in real time. This system can be operated together with existing information search systems as an intelligent superstructure upon said systems, and also provides search systems of next generation using its own standards for stochastic indexing of textual documents, information exchange protocol and user request processing. Main advantages of said method in comparison with methods implemented in current search systems are as follows:

- processing of a user request in a natural language;
- retrieval of documents that certainly comprise all information relevant to the user's request;
- highlighting of text fragments according to the user's request, which comprise data and knowledge of various subject-matters required to solve a particular problem.

The main disadvantage of said method is that knowledge bases of intelligent systems intended for the morphological, syntactical and semantic analysis are filled-in by experts, which requires considerable amounts of time and technological expenses. Thus, creation of similar systems for extracting the knowledge from textual documents for satisfying needs of users of developed nations that have national subsystems in Internet, requires a long time. Therefore, said method cannot be used for creation Internet-based multi-lingual systems for extraction the knowledge from textual documents. This obstacle seriously hinders transition to a knowledge industry that would be based on textual information of national search systems and would provide qualitatively novel information services in different spheres - industrial, scientific, educational, cultural and household activities, in view of up-to-date requirements of a civilized society.

Lack of a possibility of automatic analysis of new words not comprised by dictionaries can be considered as still another disadvantage of said method. When these words appear in textual documents, experts have to determine a speech part to which the new word belongs, and determine its morphological characteristics. For this reason, the system cannot be automatically tuned for processing textual documents in respect to given new topics. It should be further noted that an efficient extraction of the knowledge requires a comprehensive processing of text fragments from different documents by means of the analysis using the logical conclusion of semantic relationships among such fragments, and by means of equivalent transformations of a sentence in a given text. Such function has not been realized in said method.

Disclosure of the Invention

An object of the invention consists in providing a method for synthesizing a self-learning system for extracting of knowledge from textual documents of search systems, to be used in creation of a global Internet-based knowledge industry, and free of the above-mentioned drawbacks. The results to be attained through implementation of the invention are as follows:

- a possibility of automatic creation of the knowledge by means of the knowledge extraction from textual documents in an electronic form in different languages, for filling-in knowledge bases;
- an automatic analysis of new words, and updating dictionaries;
- equivalent transformations of user requests and sentences of textual documents to improve efficiency of the knowledge extraction;
- a self-instruction of said systems on rules of grammatical and semantic analysis;
- an intelligent processing of the textual information and user requests to extract the knowledge in a given foreign language.

The object of the invention is achieved in a method for synthesizing a self-learning system for extraction of knowledge in a given natural language from textual documents for use in search systems, comprising the following steps:

providing a self-learning mechanism in a form of a stochastically indexed artificial intelligence system, which system is based on application of unique combinations of binary signals of stochastic information indices;
automatically instructing the system on grammatical and semantic analysis rules by using equivalent transformations of stochastically indexed text fragments and a logical conclusion, and by forming a linked semantic structures from said fragments and stochastic indexing them for representation in a form of production rules;
carrying out a morphological analysis and a stochastic indexing of linguistic documents in an electronic form in said language, with simultaneous automatic instructing the system on morphological analysis rules;
carrying out a morphological and a syntactical analysis, and a stochastic indexing of textual documents in the electronic form, pertaining to a given theme, in said language, with simultaneous automatic instructing the system on syntactical analysis rules;
carrying out a semantic analysis of the stochastically indexed textual documents in the electronic form, pertaining to the given theme, with simultaneous automatic instructing the system on semantic analysis rules;
forming a user's request in the given natural language and transforming it in the electronic form after stochastically indexing thereof as an interrogative sentence;
transforming the user's request in a stochastically indexed form into a set of new requests equivalent to said user's request;
carrying out a preliminary selection, based on the user's request, stochastically indexed fragments of textual documents in the electronic form, comprising all word combinations of said new requests;
generating a stochastically indexed semantic structure from said stochastically indexed fragments of textual documents;

basing on said structure, generating a brief reply from the system by the logical conclusion providing a link between stochastically indexed fragments of textual documents, and equivalent transformation of texts;
checking a relevancy of said brief reply to the user's request by generating an interrogative sentence from said brief reply, and comparing generated interrogative sentence with the user's request;

wherein when the generated interrogative sentence is identical to the user's request, confirming the relevancy of said brief reply to the user's request, and presenting said brief reply to the user in the given natural language.

The object of the invention is achieved in a method for synthesizing a self-learning system for extraction of knowledge in any given natural language from textual documents for use in search systems, comprising the following steps:

providing a self-learning mechanism in a form of a stochastically indexed artificial intelligence system, which system is based on application of unique combinations of binary signals of stochastic information indices for stochastic indexing and search for linguistic texts fragments in a given base language, comprising description of grammatical and semantic analysis procedures, and automatically instructing the system on grammatical and semantic analysis rules by using equivalent transformations of stochastically indexed linguistic text fragments and a logical conclusion, and by forming linked semantic structures from said fragments and stochastic indexing said structures for representation in a form of production rules;
carrying out a morphological analysis and a stochastic indexing of linguistic documents in an electronic form in the given base language, while simultaneous automatic instructing the system on morphological analysis rules, building a database of stochastically indexed dictionaries and tables of linguistic text indices for each given foreign language, and a knowledge base of morphological analysis, containing production rules for the base language and each given foreign language;
carrying out a morphological and a syntactical analysis, and a stochastic indexing of textual documents in the electronic form, on a given theme, in each given foreign language, from the search system, representing said documents as tables of indices of textual documents and storing said documents in bases of stochastically indexed texts, while simultaneous automatically instructing the system on syntactical analysis rules using the stochastically indexed linguistic texts in the base language, and building a knowledge base of syntactical analysis for the base language and each given foreign language;
carrying out a semantic analysis of said stochastically indexed textual documents in the electronic form, on the given theme, with simultaneous automatically instructing the system on semantic analyses rules, and building a knowledge base of semantic analysis for the base language and each given foreign language;
forming a user's request in a natural foreign language and transforming it in the electronic form after the stochastic indexing thereof as an interrogative sentence including an interrogative word combination and word combinations determining semantics of the user's request;
transforming the user's request in a stochastically indexed form into a set of new requests equivalent to said user's request;
carrying out a preliminary selection, based on the user's request, stochastically indexed fragments of textual documents in the electronic form, comprising all word combinations of said new requests;
generating a stochastically indexed semantic structure from said stochastically indexed fragments of textual documents;
basing on said structure, generating a brief reply from the system by the logical conclusion providing a link between stochastically indexed fragments of textual documents, and equivalent transformation of the text, which reply contains stochastically indexed word combinations defining the user request semantics, and a reply word group, corresponding to the interrogative word combination of the user request;
checking a relevancy of said brief reply to the user's request by replacing the reply word group by the corresponding stochastically indexed interrogative word combination, and comparing a generated interrogative sentence with the user's request;

wherein when the generated interrogative sentence is identical to the user's request, confirming the relevancy of said brief reply to the user's request, and presenting said brief reply to the user in the given foreign language.

Preferably, the method preferably further comprising requesting, in the case of a failure to generate the interrogative sentence identical to the user's request, from the search system new textual documents to search for a reply to be relevant to the user's request.

In addition, by a user's request, a complete reply comprising a more detailed information or a particular knowledge may be generated by means of the logical conclusion to form the stochastically indexed semantic structure, and necessary equivalent transformations of said textual document fragments to obtain a new stochastically indexed text providing more detailed content of said brief reply.

In the method, the step of automatic instructing the system on morphological analysis rules preferably includes selecting, in a stochastically indexed text, a predetermined set of word forms of each of the words, providing stochastic indices of a word stem and a predetermined set of its endings, prefixes, suffixes and prepositions randomly accessing according to said indices to the stochastically indexed linguistic texts, selecting therefrom fragments associating said set of endings, prefixes, suffixes and prepositions with a speech part corresponding to a word, as well as with a complete set of endings, prefixes, suffixes and prepositions resulting from a word declination or conjugation, transforming said fragments into the form of production rules by stochastic indexing, wherein correctness of each of the rules being provided by autonomous derivation on the basis of several fragments from corresponding linguistic texts, and obtaining a table of indices of production rules for the knowledge base of morphological analysis.

Preferably, the step of stochastic indexing of linguistic texts, after determining the speech part of each word using rules of knowledge base of morphological analysis, includes filling the stochastically indexed database of dictionaries with stochastic indices of each word stem and those of the complete set of its endings, prefixes, suffixes and prepositions, and the step of building tables of text indices includes stochastic transforming of information and generating unique binary combinations of indices of word stems, their endings, prefixes, suffixes, prepositions, sentences, paragraphs and text titles, which indices are placed in the tables of indices of the base of stochastically indexed texts, and providing linking between said indices, which linking being specified in an original text and ensuring text recovery using the table of indices.

In the method, the step of automatically instructing the system on rules of syntactical analysis preferably includes searching, in the stochastically indexed linguistic texts, for fragments describing a procedure of syntactical analysis of sentences; taking logical conclusion to obtain the stochastically indexed semantic structure defining the link between syntactic elements and structures and words' predetermined speech parts; deriving production rules specifying the syntactical analysis of sentences in respect of morphological word characteristics, wherein correctness of each of the rules being provided by autonomous derivation based on several fragments from corresponding linguistic texts, storing the resulted rules in the knowledge base of syntactical analysis, being stochastically indexed and represented in the form of the table of indices. In addition, the step of automatic instructing the system on the rules of semantic analysis may further include forming a request to tables of indexes of linguistic texts with reference to stochastic indices of word stems and speech parts, sentence members not exactly defined, and obtaining a reply as a text fragment describing semantic characteristics to be possessed by the words to conform with a particular sentence member; and, according to said reply, referring, using a stochastic index of a given word stem and required semantic characteristics, to the tables of indexes of general-use or special dictionaries and encyclopaedias; and, by logical conclusion, making an attempt to specify the stochastically indexed semantic structure linking the given word and required semantic characteristics; and, if the attempt is successful, deciding that said sentence member is determined exactly; transforming the text fragment relevant to the request into the production rule, wherein correctness of each of the rules being provided by autonomous derivation based on several fragments from corresponding linguistic texts, storing said rule in the knowledge base of semantic analysis, being stochastically indexed and represented in the form of the table of indices to be used in the semantic analysis of words as sentence members, and links between word combinations.

The method may further comprise, after the index table of each text has been generated and said text has been morphologically, syntactically and semantically analyzed, generating stochastic indices of speech part names, sentence members and questions to them corresponding to each word within each of the sentences and entering said indices into the tables of indices of said text to provide automatically determining, in the search for text fragments, what speech part and sentence member each of the words belongs to, and to state questions to said word; and additionally, after all tables of indices of texts have been generated, generating a table of indices for a given theme, wherein rows are designated by non-repeating stochastic indices of word stems, and each column corresponds to a stochastic index of particular text; and entering into said table stochastic indices of text paragraphs containing a word with a particular stem index, which table of indices for the given theme being used for a preliminary search for fragments comprising a predetermined set of word combinations of the user's request.

In the method, the step of equivalent transforming of the user's request preferably includes using synonyms, words having approximately the same meaning, and replacement of speech parts and sentence members with preserving the meaning of the user's request; on the basis of stochastically indexed rules of the morphological, syntactical and semantic analysis to provide equivalent structures of word combinations of the interrogative sentence of the user's request and to maintain the semantic relationship therebetween; and the step of generating the semantically linked text fragments comprising all word combinations of the user's request includes referencing, according to stochastic indices of said word stems, to the table of text indices in respect of the given theme, selecting stochastic indices of paragraphs and corresponding texts comprising all word combinations of the user's request, referencing, according to said indices, to the table of indices of each of the selected texts; making the logical conclusion based on the tables of indices and the equivalent transformations of texts to produce a stochastically indexed semantic structure linking indices of the word groups of the reply corresponding to the interrogative word combination of the user request, and all word combinations of the user's request that define the semantics of the user's request and comprised by the pre-selected paragraphs.

Besides, the method preferably further comprises using the stochastically indexed semantic structure, successfully produced by the logical conclusion and correspondent to the user's request, as a basis to generate, using the obtained set of text fragments, an interrogative sentence identical to the user's request; generating said interrogative sentence by the equivalent transformation of stochastic indices of the word stems and word endings, suffixes, prefixes and prepositions based on rules from said knowledge bases to provide required semantic characteristics of each word combination of textual fragments of the user's request, and using the logical conclusion based on transitive relationships between word combinations to combine them into the interrogative sentence that is identical to the user's request and comprises the word group of the replay, corresponding to the interrogative word combination of the user's request; wherein the correctness of the brief reply being ensured by generation of several identical stochastically indexed semantic structures of said reply on the basis of various pre-selected stochastically indexed fragments of textual documents.

In addition, the method preferably comprises, during the search process and the generation of the reply using tables of indices of textual documents, self-learning of the system by generation indexed textual elements linking the request and the relevant brief reply to produce a knowledge base comprising elements of the type "request-reply", which upon stochastic indexing, is presented in the form of tables of indices and is used for grammatical and semantic analysis of sentences of the text and for generation of replies to repeated requests contained in said indexed knowledge base; wherein the step of generating the complete reply containing the knowledge relevant to the user's request on the basis of the brief reply and with the aid of a logical conclusion according to the tables of indices used when obtaining a text fragment, comprising generating a stochastically indexed semantic structure linking a word group of the replay to the stochastic indices of word stems of the sentences, and this linking maintains the transitive relationship providing complete disclosure of the brief reply within the text fragment to obtain a linked text of the complete reply using equivalent transformations of sentences on the basis of said stochastically indexed semantic structure.

In the method, the equivalent transformation of the stochastically indexed fragments preferably comprises representing each sentence as a set of stochastically indexed word combinations, transforming said combinations using rules stored in the knowledge bases of morphological, syntactical and semantic analyses by means of equivalent transformation of stochastic indices of common root word stems, word endings, prefixes, suffixes and prepositions to produce new speech parts or sentence members, with provision of the constancy of the links between word combinations in the stochastically indexed semantic structure of each sentence, and the concordance between sentences when new text fragments are generated.

Additionally, when a new word emerges in the indexed text in the process of stochastic indexing of textual documents, which word is not contained in the dictionary of stochastically indexed words or in the linguistic texts, the method preferably includes retrieving a common root word with respect to the new word in the dictionary and a rule for the equivalent transformation of said common root word into the new word in the knowledge base of morphological analysis; determining, by an equivalent transformation type, the speech part which the new word belongs to and all its word forms produced by declination or conjugation,

and if no common root words found in the dictionary, selecting from the text a particular set of word forms of the new word, and determining based on endings, suffixes and prefixes of said word forms, using the stochastically indexed dictionary or products rules of the morphological analysis, the speech part which said new word belongs to, and the complete set of its word forms produced by declination or conjugation.

Besides, the method provides simultaneous extraction of knowledge from the textual documents in given foreign languages, implemented by automatic instructing the system in the rules of the morphological, syntactical and semantic analyses with respect to the given base language; building a database of stochastically indexed dictionary and knowledge bases of morphological, syntactical and semantic analysis using stochastically indexed linguistic texts in a given base language; automatic generating, using said bases, requests for automatic instruction of the system in any of given foreign languages, preliminary selecting, according to said requests, linguistic texts fragments in the base language, which fragments contain the knowledge necessary for learning said foreign language, performing equivalent transformation of said texts; generating stochastically indexed semantic structures and making logical conclusions on said structures to generate replies relevant to the automatically generated requests, using said replies for generating knowledge base of morphological, syntactical and semantic analyses for any of the given foreign languages, ensuring extraction of knowledge from textual documents in a given foreign language.

Brief Description of Drawings

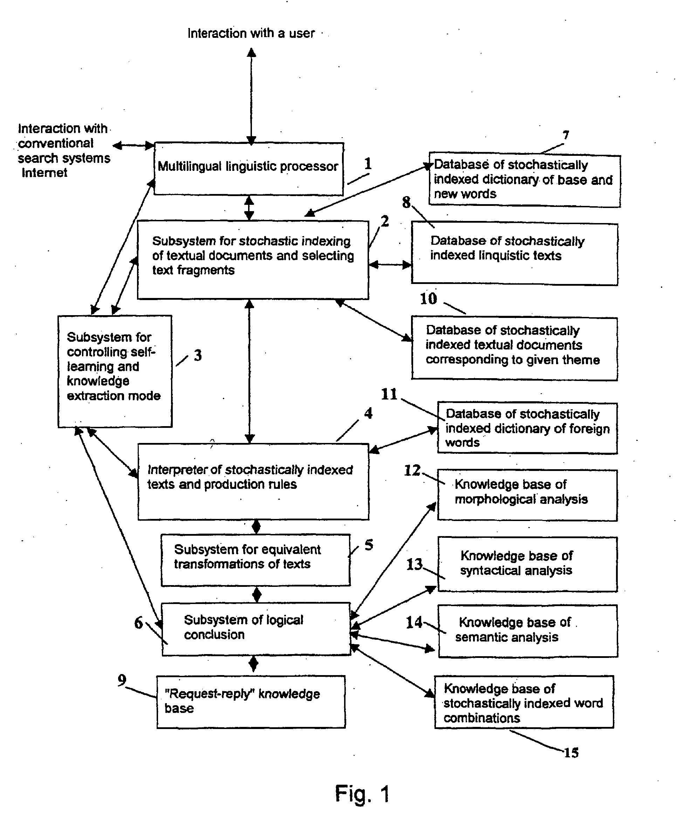

The invention is further explained by an example shown in Fig. 1 that illustrates a block diagram of an intelligent self-learning system for extraction of knowledge from the textual documents for search systems, as well as by the followings Tables:

Table 1 - a sentence frame;
Table 2 - text indices;
Table 3 - indices of texts pertaining to a given topic.

Description of the Preferred Embodiment of the Invention

The terms used in this description are defined as follows:

**Knowledge base** - one or more specially arranged files that store a systematic set of notions, rules and facts relating to a topic.

**Interrogative word combination** is a word combination having an interrogative pronoun or adverb serving as the interrogative word associated with a main word in the word combination (noun or verb).

**Grammatical analysis** - the morphological and the semantic analysis.

**Knowledge** is a new textual information not explicitly contained in textual documents, which information is automatically generated by the system, using equivalent transformations and logical conclusions, in the form of a reply, and which information is relevant to a user request and intended to solve a correspondent problem in accordance with the request

**Linguistic texts** are educational-methodological, scientific, reference (reference dictionaries, encyclopaedias) and other texts intended for learning a given language.

**Logical conclusion** is a technique to process the knowledge, which technique simulates a mental reasoning process, and basing on certain linguistic units, allows to synthesize a semantic structure having a definite meaning.

**Morphological analysis** is an analytical study of sentence words to determine a morphological composition, with subsequent detailing of characteristics of separate words that relate to one or another speech part; whereby first are specified permanent morphological features of the word, which features do not depend on its position in a sentence; then analyzed is a word's grammatical form related to its declination or conjugation.

**Word stem** is a word part that expresses its lexical meaning; words capable of being subjected to declination and conjugation have a stem and an ending, and other type of words have only the stem.

**Search system** is a system operable to carry out automatic search of information with reference to key words, topics, etc.

**Production rules** is a form of representation of the knowledge as a complex sentence "If (condition), then (conclusion)", where the condition comprises different word combinations including predicative relations and other relations between objects in a given topical sphere and united by the logical "and"; the conclusion comprises the word combination or a set of word combinations that define a semantic consequence, which is true, or an action which is initiated - if all word combinations of the condition are true.

**Relevancy** is a measure determining an extent to which a document meets the criteria specified in the user request.

**Semantic structure** is a form of relation of separate linguistic units of different sentences with respect to types of relations between them, which structure expresses a certain semantic meaning of an analyzed text.

**Semantic analysis** is an analysis of meaning, significance of separate linguistic units: words, word combinations of a sentence, their correlation with specific kinds of relations between objects of a topical sphere and reality phenomena.

**Syntactical analysis** is an analytical study of a sentence for determining a syntactic composition thereof, with subsequent specification of characteristics of separate words, word combinations, their types, kinds of relation between words in the word combination and the sentence, a structure of sentences, structural types of sentences.

**System of artificial intelligence** is a soft/hardware system comprising, as its basis, a logical conclusion subsystem, knowledge bases, and other soft/hardware means of artificial intelligence; and intended to support human intellectual activities or to replace an operator in control processes.

**Declination of a word** is modification of nouns by cases (for most nouns by singular/plural numbers as well), and for adjectives and other governed words - by genders too.

**Word combination** is a syntactic unit constituted by two or more words basing on the dependence relationship - agreement, government or adjoining, and also on the lexical-grammatical relations brought about by said relationship.

**Word form** is a word existing in a given grammatical form.

**Conjugation of a word** is modification of a verb with respect to persons, numbers, tenses and declinations; and in past tense and subjunctive mood in the singular number - with respect genders as well.

**Equivalent transformation** is a replacement of separate linguistic units with another ones, with maintenance of their relationship within a sentence semantic structure or in a certain set of sentences of a text, which sentences are capable of expressing the same semantic meaning.

Implementation of claimed method is explained in detail by example of structure and operating of the intellectual self-learning system for extracting the knowledge for search systems (ISLSEK) shown in Fig. 1. This stochastically indexed system of artificial intelligence includes:

- a multi-lingual processor (1);
- a subsystem of stochastic indexing of textual documents and selecting text fragments (2);
- a subsystem for controlling self-instruction and knowledge-extraction mode (3);
- an interpreter (4) of stochastically indexed texts and production rules;
- a subsystem of equivalent transformations of text (5);
- a logical conclusion subsystem (6);
- a database of stochastically indexed dictionaries of base words and new words (7);
- a database of stochastically indexed linguistic texts (8);
- a "request-reply" knowledge base (9);
- a database of stochastically indexed textual documents relating to given theme (10);
- a database of stochastically indexed dictionaries of foreign words (11);
- a knowledge base of morphological analysis (12);
- a knowledge base of syntactical analysis (13);
- a knowledge base of semantic analysis (14);
- a database of stochastically indexed word combinations (15).

Said system is based on the use of stochastic transformation and indexing of symbolic information, compilation of tables of indices of production rules to control the self-instruction mode, and text indices. The system provides access, according to stochastic indices, to the textual information fragments, logical conclusion and equivalent transformations of texts with the use of stochastically indexed rules for extraction of the knowledge from the selected text fragments and for representation of the knowledge in the form of production rules or as replies to user requests.

Creation of ISLSEK provides a mechanism for self-instructing the system on rules of the morphological, syntactical and semantic analysis of the textual information on the basis of linguistic texts. Said texts comprise dictionaries of general use, specialized dictionaries, synonyms dictionaries, reference dictionaries, educational-methodological texts relating to the grammar of given languages, etc.

Communication of the user with the system is carried out via the multi-lingual linguistic processor 1. The linguistic processor 1 inputs the user requests written in a natural language, and outputs the replies generated by the system. The information exchange between the user and the system can be effected in any of the given languages. The linguistic processor 1, on command of the self-instruction and knowledge extraction mode control subsystem 3 provides interaction with a search system connected to ISLSEK. The purpose of the interaction consists in inputting new textual documents from the search system in the given language relating to the certain theme on command from the subsystem 3 for further processing. The mufti-lingual linguistic processor 1 also provides inputting of linguistic texts in the given language into the system, in the electronic form.

The morphological analysis of linguistic texts and the automatic instruction of the system on the morphological analysis rules is effected on command from the self-instruction and knowledge extraction mode control subsystem 3 in the course of compilation of the base dictionary and entering of said dictionary into the database 7 of the stochastically indexed dictionaries of the base and new words. These functions are performed simultaneously with indexing of linguistic texts using the subsystem 2 of stochastic indexing of textual documents and selecting texts fragments.

For compilation of the stochastically indexed base dictionary used is a general-purpose dictionary in the electronic form, which is inputted into the system via the multi-lingual linguistic processor 1. According to given word forms of said dictionary, the speech part of the each word, its stem and the sets of endings are determined. The word stem is stochastically indexed using the subsystem 2 of stochastic indexing of textual documents and selecting text fragments, and said word stem is stored in the database 7 of stochastically indexed dictionaries of the base and new words in the table of stochastically indexed base dictionary in the column of indices of word stems.

As a result of the above-mentioned processing of the words of said dictionary, the multi-lingual linguistic processor 1 produces stochastic indices of stems of all words and stems themselves, as well as a set of endings are stored in the database 7 of stochastically indexed dictionaries of base and new words.

The stochastically indexed base dictionary, stored in the database 7 of stochastically indexed dictionaries of base and new words, has a number of table formats, each corresponding to a definite speech part. The table headers include cells comprising names of morphological characteristics (gender, number, case, person, tense, etc.), and also questions corresponding to word forms of given word, which word forms are produced when the given word is declined or conjugated. Each stem corresponds to the row comprising endings of said word forms of the word. It should be noted that when filling of the tables of the stochastically indexed base dictionary commences, only few word forms of each of the words are known, i.e. the word forms provided in a dictionary of general-use words. Other word forms and their respective endings, suffixes and prefixes for filling the tables of the stochastically indexed base dictionary are specified in the mode of automatic self-instruction of the system on the morphological analysis rules after the initial indexing of appropriate linguistic texts.

The main principle of this mechanism is the use of the novel method for stochastic indexing of textual documents, which method is carried out in the subsystem 2 of stochastic indexing of textual documents and selecting of text fragments. The procedure is based on functions of stochastic transformation of the symbolic information and generation of stochastic indices in the form of unique binary combinations of word stems, sentences, paragraphs and titles of textual documents including bibliographic references. The stochastic transformation of the symbolic information, generating stochastic indices $\{I_{\xi i}^{(u)}\}$ of the word stems, $\{I_{\xi i}^{(p)}\}$ of the sentences, $\{I_{\xi i}^{(a)}\}$ of the paragraphs and $\{I_{\xi i}^{(t)}\}$ of the title of processed text is accomplished simultaneously with generating frames of each sentence (Table 1) and producing of tables of indices of a given text (Table 2).

Said frame (Table 1), created in the subsystem 2 of stochastic indexing of textual documents and selecting text fragments comprises ten levels (rows) of slots (cells). These slot cells are filled in the course of stochastic indexing of the text, as well as during the morphological, syntactical and semantic analysis of each sentence.

During stochastic indexing of linguistic texts, in the first level slots written are stochastic indices $\{I_{\xi ij}^{(u)}\}$ of word stems and their endings. The second level slots contain the words according to their sequence in the i-th sentence. Prepositions, particles, conjunctions and punctuation marks are placed in the slots of the words with which they are associated. For filling the third level slots, used are stochastic indices $\{I_{\xi ij}^{(u)}\}$ of word stems and their endings, written in the first level slots.

According to the word stem indices, accessed are rows of corresponding tables of the stochastically indexed base dictionary, which rows are designated by identical indices for determination of a speech part, with which a given word is associated. Said information from the database 7 of the stochastically indexed dictionaries of base and new words is written into the sentence frame third level slots which correspond to the words of the second level slots.

The speech part characteristics are written into the third level slots of the frame and the slots of fourth-tenth levels are filled during the subsequent morphological analysis and the syntactical analysis of the text, carried out simultaneously with instructing the system on the morphological analysis and syntactical analysis rules. This process will be detailed below.

On the basis of the text sentence frames with the filled first four slot levels the subsystem 2 of stochastic indexing of textual documents and selecting text fragments generates tables of indices of the given text.

Table 2 represent the table of indices wherein rows are designated by stochastic indices $\{I_{\xi i}^{(u)}\}$ of word stems; columns are designated by paragraph indices $\{I_{\xi j}^{(a)}\}$ in the order of their appearance in the text, and cells located on intersection of corresponding columns and rows comprise the list indices $\{I_{\xi ij}^{(s)}\}$. The information designated in each list as $\{I_{\xi ij}^{(s)}\}$, is written in a separate file, and generally includes the following data:

$\{I_{\xi ij}^{(p)}\}$ is an index of a sentence comprising a given word;

$N_i^{(n)}$ is a number of the sentence comprising the given word;

$(u_i u_j)$ is an ending which the given word has in the sentence $(I_{\xi i}^{(p)} N_i^{(n)})$;

$I_{\xi j-1}^{(n)}$ is an index of a preceding word in the sentence or in the paragraph of the text, wherein

**if** $I_{\xi j}^{(u)}$ is the first word in the sentence (paragraph), then the index $I_{\xi j-1}^{(u)}$ is followed by a full stop. $I_{\xi j-1}^{(u)}$ can correspond to the final word of the preceding sentence within the given paragraph or the preceding paragraph. If $I_{\xi j-1}^{(n)}$ is followed by a comma, it means that $I_{\xi j}^{(n)}$ may start a participial or an adverbial-participle construction, a subordinate clause or a simple sentence within a complex one;

$I_{\xi(j+1)}^{(u)}$ is an index of a subsequent word in the sentence, paragraph, text, whereby if $I_{\xi j}^{(u)}$ is a final word in the sentence (paragraph), then the full stop precedes $I_{\xi j-1}^{(u)}$;

$I_{\xi j-1}^{(u)}$ may correspond to the word that starts a new sentence in this paragraph or of the next paragraph. If $I_{\xi j-1}^{(u)}$ is preceded by the comma, it means that $I_{\xi j}^{(u)}$ may finalize the adverbial-participle, participial constructions, or a simple sentence within a complex one;

$I_{\xi j}^{(vu)}$ is an index of a question to the given word, as to the sentence member;

$I_{\xi j}^{(pu)}$ is an index of a designation of the sentence member with which the given word is associated;

$I_{\xi j}^{(vpru)}$ is an index of the question to which the adverbial-participle or the participial construction or the subordinate sentence starting $I_{\xi j}^{(u)}$ corresponds;

$I_{\xi j}^{(pru)}$ is an index of the designation of the sentence member to which adverbial- participle or participial construction or the subordinate clause starting $I_{\xi j}^{(u)}$ corresponds;

Said indices and symbols correspond to the word having $I_{\xi i}^{(u)}$ stem in one of $I_{\xi j}^{(p)}$ sentences of $I_{\xi j}^{(a)}$ paragraph, and have the predetermined format that defines the position of indices and symbols within the given group. In the case any indices are not present, in the corresponding position a "blank" mark is inserted. If the given word $I_{\xi i}^{(u)}$ is comprised by n $\{I_{\xi i}^{(p)}\}$ sentences of $I_{\xi i}^{(a)}$ paragraph, then quantity of said groups within the list will be also **n**.

It is noted that the first six indices of the $I_{\xi ij}{}^{(s)}$ list are generated in the course of stochastic indexing of the text. Thereby according to the stem index $I_{\xi i}{}^{(u)}$ by way of referring to the stochastically indexed base dictionary one will be always able to determine the speech part whereto the given word relates. The remaining data of the $I_{\xi ij}{}^{(s)}$ list are determined after filling four-ten levels of sentence frames of the text during the further morphological analysis and the syntactical analysis which are performed simultaneously with self-instructing the system on the rules of the grammatical analysis of sentences.

After stochastic indexing of all linguistic texts, inclusive of the texts comprising descriptions of the grammatical analysis of sentences, said texts are stored in the database 8 of stochastically indexed linguistic texts, and the method proceeds to derivation of rules of the text morphological analysis simultaneously with filling of the database 7 of stochastically indexed dictionaries of base and new words.

Therefore, from each table of the stochastically indexed base dictionary containing the word stems relating to the given speech part, selected is the stochastic index of the each word stem and of the predetermined set of its endings or prepositions. Then the database 8 of stochastically indexed linguistic texts is accessed according to said indices to select text fragments that interrelate said speech part index and said set of word endings or prepositions to the complete set of corresponding endings, prepositions or questions produced by the declination or the conjugation. Then this text fragment is inputted to the interpreter 4 of stochastically indexed texts and production rules, wherein the stochastically indexed semantic structure is generated as a set of word combinations of each of the sentences comprised by said fragment:

$$S : \{( I_{\xi i}{}^{(u)}\ I_{\xi i}{}^{(r)}\ I_{\xi i}{}^{(z)} \rightarrow (I_{\xi j}{}^{(u)}\ I_{\xi j}{}^{(r)}\ I_{\xi j}{}^{(z)})\}, \tag{1}$$

where $I_{\xi i}{}^{(u)}\ I_{\xi j}{}^{(u)}$ are the stochastic indices of respectively main and subordinate stems of words of this word combination; $I_{\xi i}{}^{(z)}\ I_{\xi j}{}^{(z)}$ are the stochastic indices of, respectively, morphological characteristics of the speech parts of the main and subordinate words of said word combination; and the $\rightarrow$ mark determines the relation between the main and subordinate words of this word combination.

The main link of each stochastically indexed semantic structure represented by the expression (1) is the verb that determines semantics of relations within the given structural pattern. A relation among different stochastically indexed semantic structures 1 comprised by different sentences exists when they have identical word combinations, their synonyms, repetition of main words or use in the second sentence of the pronoun that corresponds to one of word combinations of the first sentence, as well as a pronoun in combination with the main word. Thereby found are the sentences or portions of sentences wherein the stochastically indexed semantic structure comprising indexed initial request data is duly related to the stochastically indexed semantic structure having the indexed data of the reply. To determine the verb semantics, the database 8 of stochastically indexed linguistic texts is referred to, according to the stochastic indices of verb stems, to get access to the tables of indices of synonym dictionaries.

If the first and second structures are interconnected via a word combination having a speech part to be defined, and the verbs' meanings associated with this speech part are identical to, or synonymous with the verbs of the request or the presumed reply, then said structures enter the subsystem 5 of equivalent transformations of text. The subsystem 5 transforms two said semantic structures into a single stochastically indexed semantic structure of the production rule, which structure has a condition containing a request and a conclusion (reply). Said stochastically indexed semantic structure generally is expressed as follows:

$$P: I_{\xi 1}{}^{(su)} \wedge I_{\xi 2}{}^{(su)} \wedge I_{\xi 3}{}^{(su)} \wedge ... \wedge I_{\xi m}{}^{(su)} \Rightarrow$$

$$I_{\xi 1}{}^{(su)} \wedge I_{\xi 2}{}^{(su)} \wedge I_{\xi 3}{}^{(su)} \wedge ... \wedge I_{\xi n}{}^{(su)} \tag{2}$$

where $I_{\xi 1}{}^{(su)}$ is a stochastic index of the corresponding word combination

$$I_{\xi i}{}^{(su)} : (I_{\xi i}{}^{(u)}\ I_{\xi i}{}^{(r)}\ I_{\xi i}{}^{(z)}) \rightarrow (I_{\xi j}{}^{(su)}\ (I_{\xi j}{}^{(r)}\ (I_{\xi j}{}^{(z)})$$

from expression (1), and $\Rightarrow$ is interpreted in a usual logical sense as the mark of logical conclusion in the right portion of expression (2) drawn from the condition of the left portion of expression (2), when all word combinations of the condition are true (comply with the request initial data). It is noted that the correctness of each rule is ensured by independent generation of identical stochastically indexed semantic structures (2) according to the foregoing procedure and basing on a number of fragments selected from the corresponding linguistic texts.

Each production rule, derived in the subsystem 5 of equivalent transformations, in the form of expression (2), is delivered to the interpreter 4 of stochastically indexed texts and production rules, where expression (2) is transformed into the textual format of the production rules, which format is stated as "If (condition), then (conclusion)". The derived rule in the indexed form is delivered to the knowledge base 11 of morphological analysis. The procedure for synthesizing knowledge bases containing stochastically indexed rules is described in detail below.

In deriving rules for the morphological analysis of the text simultaneously with filling of the database 7 of stochastically indexed dictionaries of base and new words, the first stochastically indexed semantic structure (1) comprises stochastic indices of word stems, which indices denote a speech part and a predetermined set of its endings or prepositions. The second structure (1) is linked to the first one via the identical speech part index and determines the complete set of endings, prepositions, questions produced by the declination or the conjugation of the speech part.

By referring, in accordance with the above discussed procedure, to tables of indices of synonym dictionaries, corresponding to the linguistic texts of the database 8 of stochastically indexed linguistic texts, compliance of semantics of the verbs of the first and second semantic structures with the request and the presumed reply is checked. Then the word combination linking the first and second structures is determined. When the result is positive, two portions of said text fragment are delivered to the subsystem 5 of equivalent transformations of texts, then - to the interpreter 4 of stochastically indexed texts and production rules. As a result, said text fragment is transformed into the production rules format represented as "If (condition), then (conclusion)". The rule condition includes the word combination indices that associate the speech part and the predetermined set of endings and prepositions provided in the dictionary format and determining modifications of the word form when the word is declined or conjugated. The conclusion includes the complete set of endings, prepositions and questions produced by the declination or the conjugation of the word as a corresponding speech part. The formulated production rule is written into the knowledge base 11 of morphological analysis. After the rules determining the speech parts have been derived, the process, on command from the subsystem 3 for controlling self-instruction and knowledge extraction mode; proceeds to the step of synthesizing rules for equivalent transformations of common root words. For that purpose used is the general rule for speech part transformation, stored previously in the knowledge base 11 of morphological analysis and based on tables of the stochastically indexed base dictionary and on selection of suitable linguistic text fragmems that specify the procedure of formation of one speech part basing on another common root speech part:

"If a speech part is to be transformed into another one,
first, the stem of the first speech part is separated out,
then the stochastically indexed base dictionary format is referred to,
sought is the second speech part whose stem has a common portion that includes the root (possibly two roots, perhaps with a prefix, maybe with alteration, adding, exclusion of some sonants and consonants), with the first speech part stem; after the root has been separated out, using the stem of these speech parts, their suffixes are separated out; then - by referring to the tables of linguistic text indices with respect to stochastic indices of the speech part stems - selected is the fragment that describes an appropriate method for transforming a speech part into another one; and with reference to the dictionary format the manner of formation of the second speech part stem in respect to the stem of the first one is determined (replacement, removal, adding of suffixes); then it is determined whether this method for replacing a speech part corresponds to the required method to form the second speech part from the first speech part; and in the positive case the second speech part is adopted as the newly formed one."

As a part of transformation of particular words with the use of the general rule, a corresponding particular rule is derived on the basis of the general rule, which particular rule specifies the transformed speech parts, suffixes and the method to form one speech part from another one. This takes place in the interpreter 4 of stochastically indexed texts and production rules, and in the subsystem 5 of equivalent transformations of texts. The above-discussed procedure first transforms the given fragment into the single stochastically indexed semantic structure of the production rule (2), then - into the production rules format represented as "If (condition), the (conclusion)". These rules are entered into the knowledge base 11 of morphological analysis after the stochastic indexing has been done.

When in the course of indexing of next textual document any new word appears, whose stem is not found in the base dictionary, then the method proceeds to the procedure of defining a speech part of the new word and its endings produced by declination or conjugation.

First, for defining the speech part to which the new word belongs, at least two different word forms of the word are selected from the text; and by comparing these word forms, the constant part of the new word, i.e. presumably its stem, is determined as well as its ending. Then it is determined whether the base dictionary format comprises any words having the root (possibly with a prefix) common with that of the new word. A root is the common, indivisible part of stems of cognate words (comprising at least two letters, including one sonant), which part, by adding prefixes, suffixes and endings thereto, is used to form the common-root speech parts. According to that procedure, the common root is separated out by comparing the new word stem with the word stems taken from the base dictionary format until the common indivisible part of the two compared words - the new word and the next word of the base dictionary - is found.

Then the knowledge base 12 of morphological analysis is referred to for choosing a rule allowing to determine the speech part which the new word is related to. To that end, the appropriate rule of equivalent transformations is applied.

To use the equivalent transformations rule for determining the new word speech part, it is assumed that the second speech part in said equivalent transformation general rule relates to the new word and is unknown; the first speech part, having the common root therewith, has been found in the dictionary and thus is known. Then, using the transformations described in the rule, checking is made whether the stem of the new word of unknown speech part can be derived from the known speech part. Therefor, a family of particular rules derived from the general rule and contained in the knowledge base 12 of morphological analysis is applied to transform the known speech part into other speech parts. If application of one of the rules results in the new word's stem, then the speech part, to which the word belongs, becomes known and will correspond to the second speech part as is specified in the rule. The use of the production rules of the knowledge base 12 of morphological analysis allows to determine characteristics of each speech part in more detail. For example, when in the morphological analysis of texts in Russian, the rules of the knowledge base 12 of morphological analysis allow to determine not only the speech part of the new word, but also the ending of the noun (substantive, adjective), nominative case, sing., then, consequently, said rules allow to determine the declination type (1, 2, 3), to which the new word relates. This allows, in the case of substantives, adjectives, ordinal numbers, some types of pronouns, as well as participles, to specify exactly the complete set of their endings produced by declination. In this case, for said speech parts, it will suffice to find in the dictionary format a corresponding word having the same ending in the nominative case, sing., as the new word has. The complete set of endings of said speech parts will correspond to the set of endings of the new word, which endings will be entered in the new word dictionary format together with its stem. Then a stochastic index of the stem is formed, and resulted characteristics of the new word are written into the new word dictionary format.

If the new word is a verb, then after its stem has been separated out according to the above-discussed procedure, and referring to the knowledge base 12 of morphological analysis, its speech part and infinitive are determined and found using an appropriate rule. Basing on suffix ("**-ть**" or "**-ти**¨") of the infinitive and referring to the base dictionary format, the verb having the same suffix ("**-ть**" or "**-ти**¨") of the infinitive is found The complete set of endings of this verb produced by the conjugation thereof and entered in the dictionary format, is adopted as the presumable complete set of endings of the new verb. For more exact determination of the verb conjugation type (1, 2) and, respectively, for specifying its complete set of endings, in the course of text indexing found is a sentence wherein the verb has the form of 3rd person, plural, i.e. the sentence having the substantive expressed by a noun (pronoun) in plural, which is coordinated with the predicate expressed by said verb having personal ending "**−ут -ют**/" (1st conjugation) or "**−ат -ят**" (2nd conjugation). According to the personal ending of said verb, in the base dictionary format found is the verb having the identical ending of the 3rd person, plural. The complete set of endings of the verb is adopted as the complete set of endings of the new verb and is written together with its stem in the new word dictionary format. After formation of stochastic index of the new verb stem, all said information is written in the new-word dictionary format.

During text indexing, in the case of appearing different word forms of new words not present in the database 7 of the stochastically indexed dictionaries of base and new words, the new word stem and a specific set of its endings are separated out by way of comparison of said word forms in the subsystem 2 of stochastic indexing of textual documents and by selecting text fragments. Then the stochastic index of the new word stem is formed, together with its endings entered into the new-word dictionary format in the database 7 of stochastically indexed dictionaries of the base and new words. After said set of word forms of this word has been processed and, accordingly, the dictionary format has accommodated various kinds of its endings, the indexed base dictionary table is accessed. Said dictionary, having been filled-in, comprises indices and stems of the general-use words, and also all kinds of endings of different speech parts and their types relating to the given word and produced by the declination or the conjugation thereof together with indication of speech part characteristics. The request made to the dictionary comprises stochastic index of the stem of the word, the stem itself and also all kinds of available word form endings. In the database 7 of stochastically indexed dictionaries of base and new words, using the dictionary format, found is the word having the same endings within the complete set of endings. This implies that the new word belongs to the same speech part as the word in the dictionary, having the identical endings. After the new word speech part has been determined, all information contained in the request is entered in the new-word dictionary according to the established format. Simultaneously, the interpreter 4 of stochastically indexed texts and production rules, and the subsystem 5 of equivalent transformations of texts, according to the above-discussed procedure, transform said fragment first into the single stochastically indexed semantic structure (2) of the production rule, and then - into the production rules format in the form of "If (condition), then (conclusion)".

As a result, derived is the production rule whose condition comprises the predetermined set of the word endings, and the conclusion comprises the name of the word speech part having the endings recited in the condition;

and also, in the dictionary format, the complete set of endings that define modifications of the word form produced by the declination or the conjugation of the word. The conclusion further comprises questions to the word forms of this speech part when the same is subjected to declination or conjugation, which questions are arranged according to the procedure determined by the dictionary format.

Thus, in the course of processing of texts containing new words presented in their different word forms, the speech part of the new word is determined automatically, and new words are entered into the dictionary format in the database 7 of the stochastically indexed dictionaries of the base and new words, and the system is instructed on the morphological analysis rules. These rules are stored in the knowledge base 12 of morphological analysis which is stochastically indexed according to the procedure explained below and used, together with the stochastically indexed base dictionary format, to determine the speech part and characteristics of the new word, if the word is not present in the new word dictionary format.

After performing the morphological analysis and the stochastic indexing of the linguistic text and creating the knowledge base 12 of morphological analysis, the database 8 of stochastically indexed linguistic texts, as well as the database 7 of stochastically indexed dictionaries of base and new words, the method proceeds to stochastic indexing of the texts pertaining to the given theme, with simultaneous instructing the system on the syntactical analysis rules.

The automatic instructing the system on the syntactical analysis rules is carried out on command from the subsystem 3 for controlling self-instruction and knowledge extraction mode by way of searching, in the database 8 of stochastically indexed linguistic texts, for fragments defining the sentence syntactical analysis procedure. First, the fragments according to the above-discussed procedure are transformed into a set of stochastically indexed semantic structures of the production rules, which generally have the form of expression (2).

Then logical conclusion subsystem 6, using the obtained stochastically indexed semantic structures (2) of the production rules describing the sentence syntactical analysis procedure, realizes the logical conclusion to produce stochastically indexed semantic structures of new production rules. These semantic structures link the syntactic elements to the predetermined speech parts during derivation of the production rules specifying the sentence syntactical analysis based on word morphological characteristics. The derived rules are stored in the syntactical analysis database 12 stochastically indexed and represented in the form of the index table.

As mentioned above, the text syntactical analysis starts with determination of the procedure for execution thereof, which procedure is described in educational-methodological textual documents relating to the grammar of the given language. For extraction from said text of the knowledge defining the syntactical analysis procedure, the subsystem 3 for controlling self-instruction and knowledge extraction mode initially compiles a request to the database 8 of stochastically indexed linguistic texts to access tables of indices of educational-methodological texts. According to said request including phrase "syntactical analysis procedure" in the given language, in said texts the paragraphs including said phrase and the terms defining the syntactical analysis sequence will be found.

After processing the text fragment from the appropriate educational-methodological aids has been completed, the following production rule may be produced, for example, for the Russian language:

"If a sentence is to be parsed, the syntactical analysis procedure will be as follows: a word combination (the complex or compound relationship), a simple sentence (substantive, predicate, attribute, object, adverb), a type of simple sentence (narrative, interrogative, imperative), a sentence structure (single- or two-member, extended or non-extended), predicate (simple, composite verbal, composite nominal), a sentence having homogeneous members, a sentence having separate members, a direct-speech sentence, a complex sentence, a compound sentence having one subordinate clause, a compound sentence having several subordinate clauses, a complex sentence without conjunctions, a complex sentence having different kinds of relation". After this rule has been formulated as expression (2), basing on indices $\{I_{\xi i}{}^{(su)}\}$ of word combinations, formed is a stochastic index of the production rule itself $\{I_{\xi i}{}^{(pp)}\}$ as a unique binary combination of a predetermined length:

$$I_{\xi i}{}^{(pp)} = F\ (I_{\xi 1}{}^{(su)} \wedge I_{\xi 2}{}^{(su)} \wedge ... \wedge I_{\xi m}{}^{(su)} \Rightarrow I_{\xi 1}{}^{(su)} \wedge I_{\xi 2}{}^{(su)} \wedge ... \wedge I_{\xi n}{}^{(su)}) \tag{3}$$

**F** is the function of stochastic transformation of the production rule.

Then each of the terms mentioned in the conclusion of the production rule (3) is disclosed in turn by way of compiling the appropriate requests to the database 8 of stochastically indexed linguistic texts. The outcome will be a plurality of $\{I_{\xi ij}{}^{(pp)}\}$ rules determining each of the syntactic terms comprised by rule $I_{\xi i}{}^{(pp)}$. Using relations between the production rules including identical syntactic terms in the condition or conclusion, the subsystem 6 effects the logical conclusion. This will result in formation of the following sequence of logical relationship of the production rule:

$$I_{\xi i}^{(pp)} \rightarrow \{I_{\xi i1}^{(pp)}\} \rightarrow \{I_{\xi i2}^{(pp)}\} \rightarrow \{I_{\xi i3}^{(pp)}\} \rightarrow \{I_{\xi ik}^{(pp)}\} \qquad (4)$$

Here the indices $\{I_{\xi ij}^{(pp)}\}$ denote a set of the rules relating to a certain level of syntactical analysis as predetermined in the rule $I_{\xi i}^{(pp)}$. For example, this can be the word combination (complex or compound relationship), the simple sentence (substantive, predicate, attribute, object, adverb), the type of the simple sentence (narrative, interrogative, imperative) etc.

Thus, the system realizes a deductive logical conclusion whose purpose consists in connecting syntactic terms to particular word speech parts, their characteristics, and carrying out consecutive syntactical analysis under said rule. For example, for the Russian language, in the course of said logical conclusion, for the term "substantive" the following text fragment may be found: "A substantive in a sentence can be expressed by following words: a noun in nominative case, pronoun in nominative case, infinitive, a single word combination". The obtained text fragment is delivered to the interpreter 4, the subsystem 5 of equivalent transformations of text and the logical conclusion subsystem 6. Said transformations, with the use of expression (2), provide a set of the production rules that link the word morphological characteristics to names of the sentence members:

"If a sentence has a word being a noun in nominative case, then the word is presumably a substantive".
"If a sentence has a word being a pronoun in nominative case, then the word is presumably a substantive".
"If a sentence has a word being an infinitive, then the word is presumably a substantive".
"If a sentence has words being a single word combination, then the words are presumably a substantive".

In the course of extraction of text fragments to form production rules defining any word combinations and separate sentence members, morphological characteristics of the sentence words serve as an initial information. According to said initial information, the text fragments wherein said information, through identical word combinations, is linked to a presumable reply citing a sentence member name, are selected. These word combinations correspond to the word having initial morphological characteristics.

Therefore, the selected text fragment that defines the relation between the word with given morphological characteristics and the sentence member, can be transferred to the stochastically indexed semantic structure (2), with provision of its correctness according to the above-described procedure. Then the stochastically indexed semantic structure (2) will be represented in the following production rule format: "If (condition), then (conclusion)". Said procedure is carried out with the use of the interpreter 4, the subsystem 5 of equivalent transformations of texts and production rules. The rule condition includes the initial word morphological characteristics, and the conclusion comprises the name of the sentence member corresponding to the word, and a question corresponding to the word.

As a result, the production rules will be derived for determination of the main sentence members (substantive and predicate), auxiliary sentence members (attribute, object, adverb), as well as the word combinations made by them. Determination of the predicate specifies its type: a simple, verbal, composite nominal. First, the predicative basis of the sentence is determined, wherein the substantive and the predicate are coordinated, and also other word combinations and relations corresponding thereto. They include the substantive and the attribute, the predicate and the object, the predicate and the adverb, etc.

Thus in the course of the textual information processing during sentence syntactical analysis, self-instruction of the system on the rules for determining the main and subordinate sentence members takes place. The rules derived thereby are stored in the knowledge base 13 of syntactical analysis. Then, according to the syntactical analysis procedure, the system starts its self-instruction on the rules of determining separate sentence members. Here, the initial data are: speech parts, sentence members and their characteristics, which - after transformation of a text - will be included into the production rules' conditions. Conclusions of these rules define a type of a group of separate members, name of the sentence member and the question to which they conform.

Thus the separate agreed attributes (participial construction, adjectives with subordinate words), separate non-coordinated attributes, separate appositions, separate objects, separate adverbs, etc., inclusive of the questions corresponding thereto are described.

Thereafter, the self-instruction mode derives the production rules allowing syntactical analysis of the simple sentence basing on the initial data determining what sentence members are the words in the given sentence, what word combinations and separate groups of sentence members they constitute. The result will be the production rules allowing to determine whether the given sentence is a two-composite or single sentence (if single - a type to which the sentence relates: indefinite-personal, impersonal, nominative etc.). As a result, the sentences with similar members, separate sentence members, direct speech sentences are selected.

Then, basing on the selected text fragments, derived are the production rules for the syntactical analysis of complex sentences. In this case, the initial data comprised by the production rules are the types and characteristics of simple sentences included into complex sentences. The rules' conclusions allow to determine a type, to which the given complex sentence relates: a complex sentence, a compound sentence having one subordinate clause, a compound sentence having a number of subordinate clauses, a complex sentence without conjunctions, a complex sentence having various types of relations. The rules' conclusion also defines what question corresponds to each of the simple questions within the given complex sentence.

All above-described levels of generating the production rules conform with the sentence analysis pattern being configured in the beginning of the self-instruction mode according on command from the self-instruction and knowledge extraction mode control subsystem 3 in the form of the logical expression (4).

The production rules obtained by realization of the self-instruction mode are stored in the knowledge base 13 of syntactical analysis. It is noted that self-instructing the system on the sentence syntactical analysis rules is carried out in the very course of processing of initial texts with respect to the given topic by analysis of each of the sentences. Said analysis allows to fill the fifth-tenth levels of frame of each sentence of the text, which frame in turn is used to fill in the table of indices of the given text (Table 2) and the above-mentioned lists being the contents of each of its cells. Then the knowledge base of syntactical analysis is stochastic indexed and represented as the index table. This considerably improves efficiency of sentence analysis owing to random access according to indices of the condition corresponding to the production rules to attain the sought result.

Below follows a detailed description of the procedure for stochastic indexing of the knowledge bases, and using it in grammatical analysis of sentences.

After generating the knowledge base as a set of the production rules represented as the stochastically indexed text in the format "If (condition), then (conclusion)", each of the production rules is delivered to the interpreter 4 of stochastically indexed texts and production rules. Here, the stochastically indexed semantic structure (2) is set up again, which structure comprises all word combinations of the given rule:

$$S : \{(I_{\xi i}^{(u)}\ I_{\xi i}^{(r)}\ I_{\xi i}^{(z)}) \rightarrow (I_{\xi j}^{(u)}\ I_{\xi j}^{(r)}\ I_{\xi j}^{(z)})\} \qquad (5)$$

Each word combination is assigned a corresponding index $I_{\xi i}^{(su)}$:

$$(I_{\xi i}^{(u)}\ I_{\xi i}^{(r)}\ I_{\xi i}^{(z)}) \rightarrow (I_{\xi j}^{(u)}\ I_{\xi j}^{(r)}\ I_{\xi j}^{(z)}),$$

then, basing on said indices, unique stochastic indices of each of the production rules $I_{\xi i}^{(pp)}$ are formed according to expression (3).

Further, the index table is produced for the given knowledge base in the textual form similarly to indexing of conventional textual documents. As a paragraph, adopted is the production rule having index $I_{\xi i}^{(pp)}$. Accordingly, an entry into the production rule index table is the row comprising $\{I_{\xi i}^{(u)}\}$ stems of words of the production rules dictionary (a plurality of non-repeating word stems comprised by the production rules). Each cell of the row corresponding to a certain index $(I_{\xi i}^{(u)})$ comprises index $I_{\xi i}^{(su)}$ of a word combination and rule index $(I_{\xi i}^{(pp)})$ that includes the given word, ending and numeral of the word in the production rules, as well as indices $(I_{\xi i-1}^{(u)})$ and $(I_{\xi i+1}^{(u)})$ of, respectively, the preceding and succeeding words in the given rule. That allows, similarly to the case of the textual documents, to compile, basing on an index, a text of any production rule. The expression

$$I_{\xi i}^{(su)}: (I_{\xi i}^{(u)}\ I_{\xi i}^{(r)}\ I_{\xi i}^{(z)}) \rightarrow (I_{\xi j}^{(u)}\ I_{\xi j}^{(r)}\ I_{\xi j}^{(z)})$$

is written as a table row in the stochastically indexed word combination database 15.

The initial data for referring to the index of the production rules text are taken from the analyzed sentence frame. As was discussed above, this frame after the morphological analysis has four row levels including, respectively, indices $\{I_{\xi i}^{(u)}\}$ of word stems, words of the sentence context, speech parts and characteristics corresponding to given words and questions to them. Exactly this information, in various combinations, is comprised by the production rules conditions and allows, on the basis of the logical conclusion, decide what is the sentence member (exactly or approximately), to which the given speech part relates. The production rules indices table is referred to according to indices $\{I_{\xi i}^{(u)}\}$ of word stems of the sentence frame, as well as according to values $\{I_{\xi i}^{(su)}\}$ of word combinations of the rules' conditions or conclusions.

To perform logical conclusion functions using production rules, used is the interpreter 4 of stochastically indexed text and the production rules. Thereby, a production rule is transformed into the stochastically indexed semantic structure (2). According to word combinations $(I_{\xi i}^{(su)})$ of the production rules conditions (after referring, according to the $I_{\xi i}^{(su)}$ indices, to the database 15 of stochastically indexed word combinations and after determination of stochastic

indices $\{l_{\xi i}^{(u)}\}$ of word stems of the given word combination), the corresponding cells of the sentence frame can be retrieved, and from said cells the names of words, characteristics of speech parts and questions thereto can be read out. According to the word combinations $\{l_{\xi j}^{(su)}\}$ of the conclusion, the corresponding cells of 5-10 levels of the sentence frame must be filled in, which cells determine names of sentence members, their groups, separate members, types of simple sentences in a complex sentence, questions thereto being specified. Thereby the production rules are checked with respect to all word combinations of the condition; and if all condition word combinations linked by logical "and" are true (and all characteristics and data described in the production rules condition word combinations have been found), the condition is considered as the true one. The data determined in the rule condition word combinations are entered in the corresponding cells of the sentence frame of levels 5-10. If the conclusion has a preliminary result or a word combination, according to which the logically connected rules are to be found, then the search for them is done by referring - with respect to indices of word stems of the word combination - to the table of indices of the corresponding knowledge base. Owing to the random access to the tables, basing on the stochastic indices, the necessity to review the entire set of the production rules will be obviated. Thus, the linearity of the dependence of the logical conclusion time on a number of the production rules involved in the processing is ensured. Referring to the knowledge base and processing of the production rules are intended for filling all cells of the sentence frame with exact data.

If the syntactical analysis determines some sentence members inexactly, then for the purpose to determine them exactly, the system proceeds to the semantic analysis of words of these sentences, simultaneously with execution of the mode of self-instruction of the system on the semantic analysis rules. First of all, this relates to determination of a substantive, attribute and adverb expressed by a noun with a preposition, adverbial-participle construction, etc.

For exact determination of sentence members, used is the semantic analysis based on a function derived by ISLSEK and selecting paragraphs and sentences out of texts, which describe all possible kinds of relations between various objects. The system requests for executing of said function can be generated automatically in the self instruction and knowledge extraction mode control subsystem 3, when the syntactical analysis fails to determine exactly what sentence member are the speech parts in the considered sentence.

For that purpose used are the self-instruction and knowledge extraction mode control subsystem 3, the logical conclusion subsystem 6 and the interpreter 4 of stochastically indexed texts and production rules. Exact determination of sentence members in the case when syntactical analysis fails to determine them exactly, is based on selecting sentences describing relations between predetermined objects from a plurality of texts, and on determination of relation types among them. The automatic generation of the system requests and the semantic analysis of the selected sentences can determine the following types of relations among predetermined objects; using the interpreter 4 of stochastically indexed texts:

- gender-aspect;
- aggregate (portion - entirety)
- object relations;
- defining relations;
- adverbial;
- allowable, non-allowable.

The adverbial relations in turn are subdivided into the following kinds of:

- manner;
- place;
- time;
- measure or degree;
- cause;
- purpose,
- condition;
- concession.

In a text, said relations between objects are described by the predicative base of each sentence, which base consists of a substantive and predicate, and also by word combinations between different sentence members, and first of all by word combinations describing a relation of a predicate with an adverb (adverbial relations), or with an object (object relations). For classifying a relation type, the decisive role is played by word combinations comprising a predicate and an object or adverb related thereto. It is the contents of said two sentence members, by which determined is a type of relation existing in a given sentence between topical objects stated by a substantive and also by an object or an adverb. Attributive relations describe properties of a substantive, object or adverb using word combinations comprising agreed or non-agreed attributes. In analysis of sentence members, classification of a relation type described thereby allows to define sentence members practically exactly in the most complicated cases - when syntactical analysis gives an inexact result.

For classification of a relation type in word combinations, according to the command issued by the control subsystem 3, from the tables of indices of reference dictionaries of the database 8 of stochastically indexed linguistic texts, into the interpreter 4 written are stochastic indices of typical word combinations of each of the above-mentioned relations. In the course of semantic analysis, each of the studied word combinations is correlated with one of the word combination indices written in the interpreter 4, using the logical conclusion according to the tables of indices of the reference dictionary text and by generating a stochastically indexed semantic structure. The procedure for deriving the logical conclusion according to the text tables of indices will be explained below in description of the process for setting-up a stochastically indexed semantic structure of a system reply.

Generally, the following five information sources are used for semantic analysis of words and word combinations:

- the knowledge base 9 that contains textual elements of the "request-reply" type, formed during operation of ISLSEK for processing the typical requests (said database will be explained in more detail below);
- the database 8 of stochastically indexed linguistic texts that comprises tables of indices of reference dictionaries, encyclopaedias and base scientific-methodological references of general and specialty purposes allowing to extract knowledge about objects of a given theme and types of relations therebetween;
- the knowledge base 14 of semantic analysis that comprises rules for exact determination of sentence members, for ensuring equivalency of transformation of sentence members required for semantic analysis and for appraising relevancy of the generated replies to incoming requests; said base will be described in more detail below;
- the knowledge base 12 of morphological analysis that comprises rules for determining speech parts and equivalent transformations thereof;
- the knowledge base 13 of syntactical analysis that comprises rules for determining speech parts and equivalent transformations thereof.

The first of said knowledge bases is created on the basis of stochastically indexed brief replies generated in the course of processing of user requests, and comprises a plurality of textual elements of the "request-reply" type. This knowledge represents the semantic basis of relevant replies to user requests and comprises interrogative sentences. Each of said sentences is identical to a corresponding user request, which sentence, after an interrogative word (or an interrogative phrase), further includes a reply word group corresponding thereto. This group may include one or more word combinations, represent a group of separate sentence members or a subordinate clause. In each element of said knowledge, the question to the reply word group is determined exactly, which permits to classify relations between topical objects represented in a given sentence, and, accordingly, determine what sentence member is the main word in a given reply word combination.

The database of linguistic texts is represented by a plurality of stochastically indexed texts, reference dictionaries, encyclopaedias, base scientific-methodological references of both general and specialty purposes. They include a detailed description of general-use lexes and special terms in a given topic. These textual materials represented as tables of indices are used for extraction knowledge contained therein and characterizing principal properties of different subject-matters in a given topic and relations among them by correlating them with the above-mentioned classification system.

The knowledge base 14 of semantic analysis consists of production rules derived automatically and intended to serve for semantic analysis of texts with the use of logical conclusion and information contained in the first two knowledge bases.

The knowledge bases of morphological analysis and syntactical analysis are used for equivalent transformations of a text in the semantic analysis. The equivalent transformation process will be described in more detail below.

To ensure a reasonable processing of the knowledge, said first base is represented as the table of indices whose entry includes the stem of the words stated in the "request-reply" knowledge. Each row in the table has the cells comprising a text index, a paragraph index and number, on the basis of which the given sentence has been worded, a number of a word within the sentence, ending of the word; as well as indices of preceding and succeeding words in the sentence. This allows, by the system's request, the random access, with the use of the word stem indices, to the corresponding table rows, separation of the required cells therefrom, and, if necessary, the recovery of the initial text of the corresponding "request-reply".

Said knowledge base allows, in the sentence syntactical analysis, determine sentence members in the most complicated cases, for example, to distinguish a direct object or indirect object from an adverb, with exact classification of its type, etc. For that purpose, the semantic analysis system generates an appropriate request to the knowledge base. In the first case, when a substantive should be specified (e.g. in such sentences as ***The rain soaked the umbrella*** or ***The umbrella the rain soaked***), according to the system's request it is determined what is the object, for witch the relation expressed by the predicate will be allowable. Thus it will be obvious that the object that corresponds to the allowable relation is adopted as the substantive.

If the knowledge base does not allow to provide the answer to said request, the question will be directed to the tables of indices of the texts pertaining to the given subject-matter in order to seek a word combination comprising the required relation between objects in the entire plurality of textual documents of the second knowledge base with respect to this topic.

In the second case, on the basis of the system's request to the knowledge base, it should be determined what question is answered by the sentence member that may be considered both as the object and adverb, and thus be ascertained exactly what sentence member the given word is. To that end, in the system's request addressed to the knowledge base, the required word and presumed answer thereto are mentioned. If the knowledge base has the corresponding "request-reply", wherein in the reply word combination the main word and the question thereto coincide, accordingly, with the system's request contents, then it will mean that the analyzed sentence member exactly answers that question. Hence, said result of the system's request processing allows to determine exactly what sentence member the particular word is. For example, in analyzing a sentence *"A man's taking a walk in a park"*, or *"A man's taking a walk in a suit"*, for the purpose to specify what sentence member (adverb or object) the *in a park* or *in a* suit word combinations are, two system's requests will be generated. The first will comprise the interrogative word *where ?,* and the word combination *in a park,* as the syntactical analysis has concluded inexactly that *in a park* is the adverbial modifier of place. In the second case the following system's request will be generated: *in what ? - in a suit*. If the system's request processing results in the positive answer to each of them, then it will mean that the first word combination is exactly the adverb, and the second is the object. If a system's request is generated with an erroneous assertion (e.g. *where ?* - *in a suit*), then the answer will be negative. It means that the word combination *in a suit* is not the adverbial modifier of place.

The above-described method for generating requests to the first knowledge base of the semantic analysis system can be also applied for more difficult cases of sentence syntactical analysis. For example, in determining what type of adverb an adverbial-participle construction is, or when a type of a subordinate clause is to be specified. For that purpose, a special request is generated and comprises the given adverbial-participle construction or a subordinate clause, and basing on said request their analogues are sought in an array of the "request-reply" type knowledge, the exactness being to the extent of synonyms. If said analogues are comprised in a reply word group in said database, then they will be extracted therefrom using the text's table of indices. This will allow to define the question to which this. adverbial-participle construction or subordinate clause correspond, and, consequently, exactly ascertain the type to which it belongs.

If the first knowledge base does not comprise requested analogues, then for exact determination of sentence members used are the second and third knowledge bases together with the logical conclusion subsystem 6. As it is mentioned above, the third knowledge base comprises production rules that allow, using the semantic analysis, to specify the names of sentence members, adverbial-participle construction or subordinate clause types in complex sentences so that to form appropriate questions to them.

One of the main versions of execution of semantic analysis using this knowledge base is the translation, using production rules, of semantic attributes intrinsic to each of the sentence members into a set of word combinations comprising a determined word and a certain base word. This base word is semantically connected only to a given sentence member and explicitly corresponds to that member (cannot be used with other sentence members). In generating, from the initial analyzed text, a word combination described in the production rules, the equivalent transformations of the initial text must be often done basing on the rules of the morphological analysis and syntactical analysis knowledge bases with the use of the logical conclusion.

The required word combination having been obtained, the same is checked upon its allowability by way of referring to the second indexed texts' database, which database allows to select paragraphs and separate sentences comprising the required word combinations. If in a plurality of textual documents found is one or more sentences wherein the word combination is used, then relations between words of the word combination are allowable. Hence it is believed that the considered word exactly belongs to a particular sentence member.

Instead of separate word combinations, more complex structures (e.g. participle, adverbial-participle construction, subordinate clauses in complex sentences) may be used. Thus, a combination of semantic knowledge expressed by particular word combinations, in conjunction with determination of allowability of relations between words therein in a plurality of textual documents, allow to determine exactly sentence members, when syntactical analysis thereof does not provide the exact result.

Upon completion of the morphological and semantic analysis and the syntactical analysis of sentences of the textual document, on the basis of the sentence frames obtained thereby, the table of indices of the text is produced (Table 2), inclusive of the lists $\{I_{\varsigma i}^{(s)}\}$ that determine contents of each of the table cells. Then the method proceeds to stochastic indexing of the next text concerning the required theme. Simultaneously, performed is automatic self-instruction, and the knowledge base 14 of semantic analysis is supplied with production rules derived on the basis of corresponding text fragments using the above-described procedure and the stochastically indexed semantic structure (2). It is noted that the correctness of each of the rules is provided by independent generation, by the above-described procedure, of identical stochastically indexed semantic structures (2) basing on a number of fragments taken from corresponding linguistic texts. Then the stochastically indexed semantic structure is transferred into the production rules format represented as "If (condition), then (conclusion)". This is done by the interpreter 4 of stochastically indexed texts and production rules and in the subsystem 5 of equivalent transformations of text.

Upon processing of all textual documents on the topic, the table of indices of texts relating to that topic is produced (Table 3). Its rows are designated by non-repeating indices $\{I_{\xi i}^{(u)}\}$ of word stems included into the textual documents. Columns in this table correspond to stochastic indices $\{I_{\xi i}^{(t)}\}$ of the texts that were processed in the course of grammatical and semantic analysis. Cells in this table contain indices $\{I_{\xi i}^{(s)}\}$ of the lists comprising indices of paragraphs $\{I_{\xi i}^{(a)}\}$ of each of the texts $\{I_{\xi i}^{(t)}\}$, which include a corresponding index $\{I_{\xi i}^{(u)}\}$ of a word stem. Entries in the lists are stored in a separate file, accessed according to appropriate indices $\{I_{\xi i}^{(s)}\}$.

After said tables of indices have been produced and the knowledge bases are generated in the mode of self-instruction of ISLSEK, the method, on command of the self-instruction and knowledge extraction mode control subsystem 3, proceeds to processing of the user request to extract the knowledge from the textual documents relevant to the request

This process extensively uses equivalent transformations of both the user's request and sentences of the text fragments when the knowledge is extracted therefrom. The procedure applied to transform the text sentences is detailed below.

ISLSEK provides the following levels of equivalent transformations of the text

The first level of equivalent transformations is implemented within groups of the sentence members: word combinations that include a substantive, predicate, object, adverb. This involves changes in speech parts to replace agreed attributes with non-agreed ones. This level corresponds to such transformation of terms as: *a computer network* - *a network of computers*, *computer services - service of computers*.

The second level of equivalent transformations corresponds to equivalent transformations of sentence members within simple sentences, both autonomous sentences and sentences that constitute the complex ones. The following types of replacement of sentence members using transformations of the common-root speech parts are carried out:

a substantive is replaced with a predicate;
a predicate is replaced with a substantive;
an object is replaced with a substantive;
a predicate is replaced with an adverb, etc.

In particular cases, speech parts may not change (it is only cases that change).

The third level of equivalent transformations corresponds to equivalent transformations within complex sentences. In this case, a subordinate clause of one type can be replaced with a subordinate clause of another type, or with a participle, verbal-adverb locutions. Sometimes a complex sentence is transformed into a simple sentence by way of replacing a conjunction with suitable prepositions determined by rules.

An example of equivalent transformations with the use of replacement of sentence members in word combinations is considered below, namely the replacement of an agreed attribute with a non-agreed one, and that of a direct object with a substantive. The initial sentence is: "***Software and hardware means protect the computer programs***". In the system, the initial sentence with $\{I_{\xi 1}^{(p)}\}$ index will be represented by the following stochastically indexed semantic structure:

$$I_{\xi 1}^{(p)} : I_{\xi 12}^{(su)} \rightarrow I_{\xi 13}^{(su)} \rightarrow I_{\xi 14}^{(su)} \tag{5a}$$

This structure has the following word combinations of the initial sentence:

$I_{\xi 12}^{(su)}$ = (software and hardware means),
$I_{\xi 13}^{(su)}$ = (protect);
$I_{\xi 14}^{(su)}$ = (the computer programs).

The above-mentioned equivalent transformations of sentence members allow to create following word combinations:

$I_{\xi 22}^{(su)}$ = (programs of a computer),
$I_{\xi 23}^{(su)}$ = (are protected):
$I_{\xi 24}^{(su)}$ = (by software and hardware means).

These transformations will result in a sentence being equivalent to the initial one that had index $I_{\xi 1}^{(p)}$, and which has index $I_{\xi 2}^{(p)}$, and also the following stochastically indexed semantic structure:

$$I_{\xi 2}^{(p)} : I_{\xi 22}^{(su)} \rightarrow I_{\xi 23}^{(su)} \rightarrow I_{\xi 24}^{(su)} \tag{5b}$$

Basing on this structure, the following sentence will be generated: ***"Programs of computer are protected by software and hardware means"*** sentence, which sentence is equivalent to the initial one. It should be appreciated that in the new sentence, substantive $I_{\xi 22}^{(su)}$ corresponds to the word combination of direct attribute $I_{\xi 14}^{(su)}$ of the initial sentence, wherein agreed attribute has been replaced with the non-agreed one. Here, the substantive of the first sentence $I_{\xi 12}^{(su)}$ has been transformed into the indirect object $I_{\xi 24}^{(su)}$ in the second sentence, and predicate $I_{\xi 13}^{(su)}$ has acquired the form of reflexive verb $I_{\xi 23}^{(su)}$. Said transformations most often are used both for the equivalent transformations of the stochastically indexed sentences of a text and users' requests.

A user's request is compiled in a natural language. Then the user's request is transformed into a plurality of new requests that include an interrogative word and word combinations that define semantics of the request and are equivalent to the original request. Said equivalent transformations of the original user's request are performed with the use of synonyms, proximate-meaning words, and replacement of speech parts and sentence members. Thus, meaning of the original request is retained owing to application of stochastically indexed rules of morphological, syntactical and semantic analyses to obtain equivalent structures of word combinations of the interrogative sentence of the request, and owing to maintenance of the semantic link between word combinations.

Then, according to a transformed user request, fragments of the textual documents having all word combinations of the request are pre-selected. If this request failed to provide a possibility of preliminary selection of fragments of textual documents complying with these requirements, a new equivalent transformation of the request is carried out.

The procedure of request processing and an algorithm of generation a reply based on different textual documents, paragraphs and sentences is explained below. Upon receipt of a user's request in the linguistic processor 1, the request is entered into the subsystem 2 of stochastic indexing and separation-out of text fragments, where stochastic indices of word stems are formed and their endings are separated out. Then, the stochastically indexed request, via the self-instruction and knowledge extraction mode control subsystem 3, is written into the logical conclusion subsystem 6. Here, on the basis of the production rules of knowledge bases 12, 13, the request is subjected to the morphological analysis and the syntactical analysis. Thus, an interrogative sentence frame is produced. After that, the interpreter 4 presents the interrogative sentence as a set of word combinations having main and dependent words, and word stem stochastic indices corresponding to said word combinations.

$$S : \{(I_{\xi j}^{(u)}\ I_{\xi i}^{(r)}\ I_{\xi i}^{(z)}) \rightarrow (I_{\xi j}^{(u)}\ I_{\xi j}^{(r)}\ I_{\xi j}^{(z)}) \tag{6}$$

where $I_{\xi i}^{(u)}\ I_{\xi j}^{(u)}$ are stochastic indices of stems of the main and dependent words in a word combination:

$I_{\xi i}^{(r)}\ I_{\xi j}^{(r)}$ are the stochastic indices of speech parts of the main and dependent words in said word combination.
$I_{\xi i}^{(z)}\ I_{\xi j}^{(z)}$ are, respectively, the stochastic indices of morphological and syntax characteristics of speech parts of the main and dependent words in said word combination.

Basing on the obtained indices, a stochastically indexed semantic structure of the request is generated, which structure generally is expressed as follows:

$$P : I_{\xi 1}^{(su)} \wedge I_{\xi 2}^{(su)} \rightarrow I_{\xi 3}^{(su)} \rightarrow I_{\xi 4}^{(su)} \wedge I_{\xi 5}^{(su)} \tag{7}$$

where $I_{\xi 1}^{(su)}$ is index of the interrogative word combination,
$I_{\xi 2}^{(su)}$ is the word combination index of a substantive; $I_{\xi 3}^{(su)}$ is the word combination index of a predicate;
$I_{\xi 2}^{(su)} \rightarrow I_{\xi 3}^{(su)}$ the predicative sentence base that connects the substantive and predicate; $I_{\xi 3}^{(su)} \rightarrow I_{\xi 4}^{(su)}$ is the relation between the predicate and object (adverb) that determines a relation type in the sentence; $I_{\xi 4}^{(su)}$ is the index of word combination of the object (adverb); $I_{\xi 5}^{(su)}$ is the index of word combination of the adverb (object).

According to the indices of expressions (6, 7), by referring to the database 10 of the stochastically indexed texts o predetermined topics and using the table of indices of the texts on the predetermined theme (Fig. 4), found is a set of fragments that comprises all word combinations of the request, including the interrogative word combination. Each text fragment may consist of one or more paragraphs.

If one or more texts meeting said conditions are found, then the method proceeds to further processing of paragraphs of these texts, using tables of indices of each of them. It is noted that presence of the interrogative word combination having the question index and the stem index of the main word associated therewith in the table of indices of one of the texts with $I_{\xi 1}^{(su)}$ index (in list $I_{\xi 1}^{(s)}$ of one of cells of the table), indicates that said paragraph in the given text contains a sentence comprising a word group of the reply $I_{\xi 0}^{(su)}$, which group is linked with the main word of the interrogative word combination: $(I_{\xi 0}^{(su)} \rightarrow I_{\xi 1}^{(su)})$.

If at least one of texts complying with said conditions is not found, then the method proceeds to the equivalent transformations of the user's request by replacing the words not comprised by the text paragraph with synonyms and words of proximate meaning, and by replacing of speech parts and sentence members without changing meaning of the request.

Further processing of the text satisfying said conditions is carried out with reference to the table of indices of the given text. For that purpose, using indices of interrogative word combination $I_{\xi 1}^{(su)}$ by referring to the table of text indices in the database 10 found is a sentence that comprises a word group of reply, which word group corresponds to the interrogative word combination of the request and is linked to the main word of the request. If word combinations

$$S : \{(I_{\xi i}^{(u)} I_{\xi i}^{(r)} I_{\xi i}^{(z)}) \rightarrow (I_{\xi j}^{(u)} I_{\xi j}^{(r)} I_{\xi j}^{(z)})$$

of the request are comprised by different paragraphs of various texts

$$V : \{(I_{\xi i}^{(t)} I_{\xi j}^{(a)})\},$$

then the necessary condition to form a single, logically linked text of the reply is the presence, in at least one of the paragraphs, of the word group of reply $I_{\xi 0}^{(su)}$, corresponding to $I_{\xi 1}^{(t)}$ of the interrogative word combination of the request, and the predicative base $I_{\xi 2}^{(su)} \rightarrow I_{\xi 3}^{(su)}$ of expression (7), comprising, in the general form, indices of the substantive and predicate word combinations. If said condition is met, then the separated-out set of paragraphs is used in further processing, because basing on the preliminary selected paragraphs an attempt can be made to form a single logically linked text of the reply. Otherwise, the method should proceed to inputting and indexing new texts on that theme.

First, a simpler case of generation of a relevant reply is considered, when a text fragment comprising all word combinations of the request can be formed on the basis of one or more consecutive paragraphs of the given text In this case, firstly, a base of the stochastically indexed semantic structure of the reply is formed as the following expression:

$$P : I_{\xi 0}^{(su)} \rightarrow I_{\xi 1}^{(su)} \wedge I_{\xi 2}^{(su)} \rightarrow I_{\xi 3}^{(su)} \tag{8}$$

where $I_{\xi 0}^{(su)}$ is the reply word group index; $I_{\xi 1}^{(su)}$ is the interrogative word combination index; $I_{\xi 2}^{(su)}$ is the substantive word combination index; $I_{\xi 3}^{(su)}$ is the predicate word combination index; $I_{\xi 2}^{(su)} \rightarrow I_{\xi 3}^{(su)}$ is the sentence predicative base. For that purpose, after determination, in the given text fragment, of the sentence that comprises the indexed reply word group linked with the interrogative word combination main word $(I_{\xi 0}^{(su)} \rightarrow I_{\xi 1}^{(su)})$, found is a sentence that comprises the predicative base $(I_{\xi 2}^{(su)} \rightarrow I_{\xi 3}^{(su)})$.

As said word groups generally include different expressions, then to create the semantic structural pattern (8), a procedure of logical conclusion is carried out using the indexed sentences of the given text fragment. To that end, the i-th sentence; comprising the reply word group is presented as

$$P : I_{\xi 0}^{(su)} \wedge I_{\xi 1}^{(su)} \wedge I_{\xi 2i}^{(su)} \rightarrow I_{\xi 3i}^{(su)} \rightarrow I_{\xi 4i}^{(su)} \wedge I_{\xi 5i}^{(su)} \tag{9},$$

where $I_{\xi 0}^{(su)}$ is the reply word group index; $I_{\xi 1}^{(su)}$ is the interrogative word combination index: $I_{\xi 2i}^{(su)}$ is the substantive word group index; $I_{\xi 3i}^{(su)}$ is the predicate word combination index; $I_{\xi 2i}^{(su)} \rightarrow I_{\xi 3i}^{(su)}$ is the sentence predicative base; $I_{\xi 3i}^{(su)} \rightarrow I_{\xi 4i}^{(su)}$ is the relation between the predicate and object (adverb) that defines the relation type in the given sentence; $I_{\xi 4i}^{(su)}$ is the index of the object (adverb) word combinations; $I_{\xi 5i}^{(su)}$ is the adverb (object) word combination.

To implement the logical conclusion basing on expression (9), with the use of the transitive relationship, a stochastically indexed semantic structure of a **topic → comment** type for the i-th sentence is produced:

$$TR : I_{\xi 2i}^{(su)} \rightarrow I_{\xi 3i}^{(su)} \rightarrow I_{\xi 4i}^{(su)} = I_{\xi 2i}^{(su)} \rightarrow I_{\xi 4i}^{(su)} \tag{10},$$

where the topic is index $I_{\xi 2i}^{(su)}$ of the substantive word combination, and the comment is the object (adverb) word combination index $I_{\xi 4i}^{(su)}$.

The j-th sentence comprising the predicative base of the request generally has the following stochastically indexed semantic structure:

$$P : I_{\xi 2}^{(su)} \rightarrow I_{\xi 3}^{(su)} \rightarrow I_{\xi 4j}^{(su)} \wedge I_{\xi 5j}^{(su)} \tag{11}$$

where $I_{\xi 2}^{(su)}$ is the request substantive word combination index; $I_{\xi 3}^{(su)}$ is the request predicate word combination index; $I_{\xi 2}^{(su)} \rightarrow I_{\xi 3}^{(su)}$ is the request sentence predicative base; $I_{\xi 3}^{(su)} \rightarrow I_{\xi 4j}^{(su)}$ is the relation between the substantive and object (adverb) that defines the relation type in the j-th sentence; $I_{\xi 4j}^{(su)}$ is the index of the object (adverb) word combination; $I_{\xi 5j}^{(su)}$ is the index of adverb (object) word combination. Then expression (11) is transformed into the following **topic → comment** semantic structure of the **j**-th sentence:

$$TR : I_{\xi 2}^{(su)} \rightarrow I_{\xi 4j}^{(su)} \tag{12}$$

It is noted that there is the semantic link between the complete sentences in the textual information and, consequently, the grammatical (syntactic) link. There are two methods of the structural correlation of sentences, i.e. of the syntactic link between them. The first method may be termed as the concatenated (consecutive) link, the second - as the parallel link.

The concatenated link indicates the consecutive development of a thought in a linked text. The topic (theme) is an initial point, commencement of the thought progress, "the given"; the comment is the thought development, its basis, core, "the new".

The syntactic nature of the concatenated link is expressed in the structural correlation of two contiguous sentences. In general, any member of the preceding sentence, for example an object, becomes the substantive in the subsequent sentence. The most common structural types of the concatenated link are: "object-substantive", "object-object", "substantive-object", "substantive-substantive", etc.

The structural correlation between sentences in the concatenated link is expressed by: a) lexical iteration (when the sentences' correlated members are expressed identically); b) synonymous lexes; c) pronouns.

The concatenated link is one of the most important and extensively used methods of link in autonomous sentences.

The parallel link, similarly to the concatenated one, consists in the structural correlation of connected sentences. However, the nature of this correlation differs. The main structural features of the parallel link in sentences are: a) structure parallelism (a common type or syntactic proximity of connected sentences); b) parallel (similar) word order; c) identical grammatical representation of all or some sentence members.

The semantic "entrance" into both the concatenated and parallel structures of link in a paragraph is the topic of its initial sentence in the connected sentences of the given paragraph or a number of consecutive paragraphs of the text.

Thus, on the basis of an elementary semantic structure of each sentence of the **topic → comment** type, by the logical conclusion, more complex semantic structures defining links between sentences of both the concatenated and parallel types can be formed. Therefore, the necessary condition of the semantic link between the reply word group in **i**-th sentence and the request sentence predicative base in the **j**-th sentence is a proof based on a logical conclusion that they are comprised by a single semantic structure of the given text fragment. In the stochastically indexed form, this structure may be presented as follows:

$$I_{\xi 0}^{(su)} \wedge I_{\xi 1}^{(su)} \wedge I_{\xi 2i}^{(su)} \rightarrow I_{\xi 4i}^{(su)} \wedge I_{\xi 4i}^{(su)} \rightarrow I_{\xi 4k}^{(su)} \wedge \cdots \wedge I_{\xi 2m}^{(su)} \rightarrow I_{\xi 2}^{(su)} \wedge$$

$$I_{\xi 2}^{(su)} \rightarrow I_{\xi 4j}^{(su)} = I_{\xi 0}^{(su)} \wedge I_{\xi 1}^{(su)} \wedge I_{\xi 2i}^{(su)} \rightarrow I_{\xi 4i}^{(su)} \rightarrow I_{\xi 4k}^{(su)} \cdots I_{\xi 2}^{(su)} \rightarrow I_{\xi 4j}^{(su)} \tag{13}$$

The logical conclusion for ascertaining existence of the semantic link between said word groups is derived according to the table of indices of the text of stochastically indexed textual documents database 10 pertaining to given topics. To that end, used is the logical conclusion subsystem 6 and the subsystem 5 of equivalent transformations. The logical conclusion begins with the **i**-th sentence that comprises the word group of the reply linked to the main word of the interrogative word combination, the predicative base of the request, and has the stochastically indexed semantic structure (9).

After said sentence has been presented as the semantic structure of the type **topic → comment** (10), according to the table of indices, found is the next sentence wherein the comment of the given sentence transits into the topic of the next one. For that purpose used are cells corresponding to the index of the given paragraph $I_{\xi j}^{(a)}$ and to the index of the $I_{\xi 4i}^{(su)}$ word combination being an object or adverb of the i-th sentence. According to said cells, found is the number of sentence in the given paragraph, wherein the given word combination includes the substantive. Then, using the cell address information, found is the index of the predicate of said sentence and associated indices of the word combination of the object or adverb $I_{\xi 4k}^{(su)}$, i.e., according to expression (13), found is the comment of the next sentence that is logically linked to the preceding one, etc. The logical conclusion continues until a next sentence defined by the relation $(I_{\xi 2}^{(su)} \to I_{\xi 4j}^{(su)})$ includes the indices $(I_{\xi 2}^{(su)} \to I_{\xi 3}^{(su)})$ correspondent to the predicative base of the request.

If in the course of the logical conclusion, the comment index $I_{\xi 4n}^{(su)}$ of any sentence does not coincide with topic $I_{\xi 2n+1}^{(su)}$ of the next sentence, it will mean that said next sentence uses either a synonym of the given word, or the pronoun. In the former case, according to indices of word stems $I_{\xi 2n+1}^{(su)}$ of this word combination, reference is made to the table of indices in the synonym dictionary of the database 8 stochastically indexed linguistic texts. Here, word stems $\{I_{\xi s}^{(u)}\}$ of synonyms are found, from which stems the index $I_{\xi 4n}^{(su)}$ of the subsequent sentence comment can be formed. In the latter case, index $I_{\xi 2n+1}^{(su)}$ of the topic of the next sentence may correspond to a pronoun agreed with the word combination $I_{\xi 4n}^{(su)}$, which is checked according to the table of indices of dictionary of the database 7. If the first or second conditions are met, the logical conclusion continues until the sentence comprising the sought request word combination is found, in this case $(I_{\xi 2}^{(su)} \to I_{\xi 3}^{(su)})$ of the request predicative base. Thus, in the course of logical conclusion, the stochastically indexed semantic structure according to expression (13) will be synthesized.

As in the considered instance all word combinations of the request are contained in one paragraph or in a group of consecutive paragraphs of one text, then the logical conclusion in the given text fragment will be continued to generate a single stochastically indexed semantic structure that will comprise all word combinations of the request, inclusive of the word combinations of object $I_{\xi 4}^{(su)}$ and adverb $I_{\xi 5}^{(su)}$:

$$S : I_{\xi 0}^{(su)} \wedge I_{\xi 1}^{(su)} \wedge I_{\xi 2i}^{(su)} \to I_{\xi 4i}^{(su)} \to I_{\xi 4k}^{(su)} \dots I_{\xi 2}^{(su)} \to$$

$$I_{\xi 4}^{(su)} \dots I_{\xi 2m}^{(su)} \to I_{\xi 4}^{(su)} \dots I_{\xi 2n}^{(su)} \to I_{\xi 5}^{(su)} \tag{14}$$

For that purpose, the above-described logical conclusion functions are performed in the order **topic → comment** until all request word combinations comprised by various sentences of the given paragraph will be included into the semantic structure (14). It is noted that the necessary condition of synthesis of said semantic structure (14) is the correspondence of the request word combinations, and the word combinations identical to them in the text paragraph, to the same sentence members. Therefore, if some word combinations, identical to the request word combinations in the texts' sentences relate to other sentence members, then these sentences are subjected to the equivalent transformations so that said word combinations will be related to the required sentence members. These functions are performed according to the above-described procedure in the subsystem 5 of equivalent transformations.

Upon generation of the semantic structure (14), the method proceeds to checking the same on noncontradiction. To that end, checked is the semantic correlation of the word combination of predicates $\{I_{\xi 3i}^{(su)}\}$ comprised by each of the sentences, whereon the semantic structure (14) has been generated, with the base relations. Such relations are the gender-aspect relations, the "portion-entirety" or "cause-effect" (condition-conclusion) type relations. These relations are determined by referring, according to said indices, to the database 8 of stochastically indexed texts to seek the semantic meanings of the $\{I_{\xi 3i}^{(su)}\}$ predicates in the reference dictionary tables of indices. At this step, identity of the semantic meanings of predicates with the $\{I_{\xi 3i}^{(su)}\}$ indices of the above-mentioned base relations or of their synonyms written in the interpreter (4) is checked. If these conditions are met, then in the generated semantic structure (14) the transitive relationship is maintained. Thus, any sought request word combination having the $I_{\xi j}^{(su)}$ index can be transferred into the reply sentence being generated, with the use of the logical conclusion in the generated semantic structure of the **topic → comment** type after the word combination having the $I_{\xi j-1}^{(su)}$ index. If this condition is not met, then the given paragraph contains no reply that would be relevant to the user's request. In such case, the method proceeds to analysis of the next pre-selected paragraph or a set of subsequent paragraphs.

The above-described logical conclusion procedure for determining the semantic relation between the request word combinations, when said word combinations are found in different sentences of the paragraph, continues until a brief reply to the user will be generated as the sentence comprising a reply word group, interrogative word combination, predicative base and all other word combinations comprised by the reply. This generated brief reply will be presented as the following stochastically indexed semantic structure:

$$P : I_{\xi 0}^{(su)} \wedge I_{\xi 1}^{(su)} \wedge I_{\xi 2}^{(su)} \rightarrow I_{\xi 3}^{(su)} \rightarrow I_{\xi 4}^{(su)} \wedge I_{\xi 5}^{(su)} \tag{15}$$

where $I_{\xi 0}^{(su)}$ is the reply word group index, $I_{\xi 1}^{(su)}$ is the interrogative word combination index; $I_{\xi 2}^{(su)}$ is the substantive word combination index; $I_{\xi 3}^{(su)}$ is the predicate word combination index; $I_{\xi 2}^{(su)} \rightarrow I_{\xi 3}^{(su)}$ is the sentence predicative base; $I_{\xi 3}^{(su)} \rightarrow I_{\xi 4}^{(su)}$ is the relation between the predicate and object (adverb), which relation defines the relation type in the given sentence; $I_{\xi 4}^{(su)}$ is the object (adverb) word combinations' index; $I_{\xi 5}^{(su)}$ is the adverb (object) word combination index.

Correctness of the brief reply is ensured by generating, according to the above-described procedure, of several identical stochastically indexed semantic structures (15) on the basis of different pre-selected stochastically indexed fragments of textual documents.

The generated structure (15) means that the logical conclusion resulted in the brief reply that is identical to the interrogative sentence of the request. Thus, this reply is relevant to the user's request. The reply can be outputted to the user after its transformation into the textual form in a given language as the knowledge provided by the system in accordance with the request.

If the user requests that a more complete reply would be provided, the method proceeds to transformation of the initial paragraph of the text, on the basis of which paragraph the brief reply was generated; and if necessary - to transformation of subsequent text paragraphs. This is done for the purpose to obtain, on the basis of said paragraphs, a single stochastically indexed semantic structure that provides a possible detailing of the brief reply within the given text fragment. The above-mentioned functions performed to generate the complete reply are discussed below.

In the event the preliminary search in the table of indices fails to find any texts having the paragraphs that would comprise all word combinations of the request then, according to the obtained request indices, sought are the texts whose fragments, in the aggregate, include all word combinations of the request. If such set of text fragments is not found, it will mean that the contents of the database 10 of stochastically indexed textual documents do not allow to generate a reply relevant to the user's request. In such case the method should proceed to entering and indexing new texts on the given theme from the search system.

During the preliminary selection, using the table of indices of the texts according to indices of the word combinations $S : \{I_{\xi i}^{(u)} \rightarrow I_{\xi j}^{(u)}\}$ of the request, for each text selected are the fragments in the form of the set of paragraphs comprising all word combinations of the request:

$V : \{I_{\xi i}^{(t)}, I_{\xi j}^{(a)}\}$

where $I_{\xi i}^{(t)}, I_{\xi j}^{(a)}$ are, respectively, the text index and the index of paragraph of a given text that comprise certain word combinations of the user's request. If indices $I_{\xi i}^{(su)} : \{I_{\xi i}^{(u)} \rightarrow I_{\xi j}^{(u)}\}$ of the request word combinations are not entirely included into any paragraph $(I_{\xi i}^{(t)}, I_{\xi j}^{(a)})$ of at least one of the texts $I_{\xi i}^{(t)}$, but are contained in different paragraphs of one text or in different paragraphs of different texts

$V : \{I_{\xi i}^{(t)}, I_{\xi j}^{(a)}\}$,

then, basing on the pre-selected paragraphs of text fragments, a single logically linked text comprising all word combinations of the request

$S : = \{I_{\xi i}^{(su)}\}$, including the interrogative word combination, should be generated.

If, in such case, the word combinations $S : = \{I_{\xi i}^{(su)}\}$ are comprised by different paragraphs in different texts $V : \{I_{\xi i}^{(t)}, I_{\xi j}^{(a)}\}$, then the necessary condition to generated single logically linked reply text will be the presence, in at least one of the paragraphs, of indices of the reply word group $I_{\xi 0}^{(su)}$, of the main word of the interrogative word combination $I_{\xi 1}^{(su)}$ of the request and predicative base $(I_{\xi 2}^{(su)} \rightarrow I_{\xi 3}^{(su)})$ of expression (15) that includes, in the general form, indices of the substantive and predicate word combinations.

If said condition is met, then the selected set of paragraphs is used in further processing, because the attempt can be made to generate a single logically linked reply text on the basis of the pre-selected paragraphs. Otherwise, the method should proceed to entering and indexing new texts concerning the given theme.

If said condition is met, the method proceeds to forming a logically linked set of said paragraphs. For that purpose, compliance with the following condition is checked: each word combination should be contained at least in two different paragraphs:

$$I_{\xi i}^{(su)} \rightarrow (I_{\xi i}^{(t)}, I_{\xi j}^{(a)}), ..., (I_{\xi k}^{(t)}, I_{\xi i}^{(a)})$$ (16).

If said condition is not met, the method checks whether the paragraphs comprising only one request word combination $I_{\xi i}^{(su)}$, have other word combination $I_{\xi k}^{(su)}$ that is comprised by other pre-selected paragraphs and connected with $I_{\xi i}^{(su)}$ word combination by one of the base semantic relations. For said checking, the self-instruction and knowledge extraction mode control subsystem 3 generates a request for searching in the database 8 of stochastically indexed linguistic texts for a sentence that would include said indices connected by the **topic $\rightarrow$ comment** relation:

$$I_{\xi k}^{(su)} \rightarrow I_{\xi i}^{(su)}$$ (16a).

The found sentence is delivered to the interpreter 4 of stochastically indexed text and production rules that checks whether the relation (16a) corresponds to the gender-aspect, aggregate or causal relations.

If conditions (16) and (16a) are not met, it is concluded that this text fragment cannot be used to generate the reply.

If said conditions are met, the method proceeds to checking a possibility to generate a single semantic structure on the basis of selected paragraphs. To that end, at first, lists of word combination indices are compiled using the table of indices of each text comprising pre-selected paragraphs. These word combination indices are included into the paragraph designated by an appropriate index:

$$(I_{\xi i}^{(t)}, I_{\xi j}^{(a)}) \rightarrow (I_{\xi i}^{(su)}), ..., (I_{\xi k}^{(su)})$$ (17)

Then the method, using the identical indices of word combinations in the lists of said paragraphs, determines what of the paragraphs each given paragraph relates to. Basing on said lists, for each paragraph index compiled are new lists, each of which comprising indices of the other paragraphs connected to the given paragraph by identical word combination indices. Thereby, if each of the lists comprises at least one paragraph index comprised by at least one of the other lists, then, using direct or transitive relationships between the lists, a single list including indices of all paragraphs will be generated. In this case the preselected paragraphs are believed to make a logically linked set of paragraphs in the form of a single text fragment. Otherwise, this set of paragraphs is believed not to constitute a logical structure that would be required to constitute a single text fragment. In such case said set is excluded from processing, and the method proceeds to pre-selection of new text fragments.

After it has been ascertained that the preselected paragraphs constitute a single structure of logically linked paragraphs, the single text table is generated basing on corresponding tables of indices of each text For that purpose, said paragraphs are arranged in a sequence determined by the order of succession of the request word combinations comprised by the paragraphs in the request interrogative sentence. The resulted text fragment is delivered for further processing for determining, using the logical conclusion, the type of the semantic links between the sentences of the paragraphs comprising all word combinations $\{I_{\xi i}^{(su)}\}$ of the request. Said functions are performed in the attempt to generate, on the basis of the text fragment obtained by the above-described algorithm, a stochastically indexed semantic structure that will include all word combinations of the request. After that, the obtained semantic structure, using equivalent transformations and the logical conclusion on transitive relationships according to the above-described algorithm, is applied to generate the semantic structure (15) of the sentence comprising the brief reply relevant to the user request. The correctness of the brief reply is ensured by generation, according to the above-described procedure, of several identical stochastically indexed semantic structures (15) on the basis of different pre-selected stochastically indexed fragments of textual documents.

The obtained brief reply, together with the interrogative word combination, is stored in the "request-reply" knowledge base 9, which is used for processing repeating typical user requests, and, as mentioned above, for semantic analysis of indexed texts.

If, after the semantic structure has been set up, it turns out that between the word combinations $\{I_{\xi i}^{(su)}\}$ of the request in the given text fragment, the required base semantic links are not maintained, the method proceeds to search of new texts to generate the reply for the user.

If the logical conclusion produces the positive result, then the sentence with the brief reply relevant to the request will be generated, the same will be outputted to the user as the text in the given language. If in this case, the user demands a more complete reply, the method proceeds to the step of generating the complete reply basing on transformation of the previously obtained text fragment in accordance with the algorithm described below.

Execution of the above-described algorithm to generate the brief rely is exemplified as follows: Consider that after the equivalent transformations of a received user request, the request acquires the following textual form: *"What program is used in case of incorrect computer operation termination as a result of voltage failure in the mains?".* This allows the possibility of preselection of the two following logically linked paragraphs from different textual documents comprising, in entirety, all word combinations of the transformed request. The first paragraph:

*"Logical errors may occur on the hard disc. The logical errors are disorders in the file structure. To find out the logical errors, the "Disc check" routine is used. The logical errors occur when computer operation is terminated incorrectly."*

The second paragraph: *"In case of voltage failure in the mains, file structure disorders occur on the hard disc. In such case the "Disc check" routine is used."*

In the stochastically indexed form, wherein the actual processing of the request takes place and the brief reply is generated, the request will be as follows:

$$I_{\xi 0}^{(p)} : I_{\xi 01}^{(su)} \wedge I_{\xi 02}^{(su)} \to I_{\xi 03}^{(su)} \to I_{\xi 04}^{(su)} \wedge I_{\xi 05}^{(su)} \wedge I_{\xi 041}^{(su)} \wedge I_{\xi 051}^{(su)} \tag{18}$$

The following word combinations will correspond to the stochastic indices $I_{\xi 0j}^{(su)}$:

$I_{\xi 01}^{(su)}$ = (what program)
$I_{\xi 02}^{(su)}$ = (program)
$I_{\xi 03}^{(su)}$ = (is used)
$I_{\xi 04}^{(su)}$ = (in case of incorrect termination)
$I_{\xi 05}^{(su)}$ (computer operation)
$I_{\xi 41}^{(su)}$ = (as a result of failure)
$I_{\xi 051}^{(su)}$ = (voltage in the mains).

The first paragraph sentences in the stochastically indexed form will be presented as follows:

$$I_{\xi 1}^{(p)} : I_{\xi 12}^{(su)} \to I_{\xi 13}^{(su)} \to I_{\xi 14}^{(su)}$$

$$I_{\xi 2}^{(p)} : I_{\xi 22}^{(su)} \to I_{\xi 23}^{(su)} \to I_{\xi 24}^{(su)}$$

$$I_{\xi 3}^{(p)} : I_{\xi 32}^{(su)} \to I_{\xi 33}^{(su)} \to I_{\xi 34}^{(su)} \wedge I_{\xi 35}^{(su)}$$

$$I_{\xi 4}^{(p)} : I_{\xi 42}^{(su)} \to I_{\xi 43}^{(su)} \to I_{\xi 44}^{(su)} \wedge I_{\xi 45}^{(su)} \tag{19}$$

The following word combinations will correspond to the stochastic indices $I_{\xi ij}^{(su)}$:

$I_{\xi 12}^{(su)}$ = (logical errors)
$I_{\xi 13}^{(su)}$ = (may occur)
$I_{\xi 14}^{(su)}$ = (on the hard disc)
$I_{\xi 22}^{(su)}$ = (logical errors)
$I_{\xi 23}^{(su)}$ = (is)
$I_{\xi 24}^{(su)}$ = (disorders in the file structure)
$I_{\xi 32}^{(su)}$ = ("Disc check" routine)
$I_{\xi 33}^{(su)}$ = (is used)
$I_{\xi 34}^{(su)}$ = (to find out)
$I_{\xi 35}^{(su)}$ = (logical errors)
$I_{\xi 42}^{(su)}$ = (logical errors)
$I_{\xi 43}^{(su)}$ = (occur)
$I_{\xi 44}^{(su)}$ = (in case of incorrect termination)
$I_{\xi 45}^{(su)}$ = (of computer operation).

The second paragraph sentences in the stochastically indexed form will be as follows:

$$I_{\xi 5}^{(p)} : I_{\xi 52}^{(su)} \to I_{\xi 53}^{(su)} \to I_{\xi 54}^{(su)} \wedge I_{\xi 55}^{(su)} \wedge I_{\xi 551}^{(su)}$$

$$I_{\xi 6}^{(p)} : I_{\xi 62}^{(su)} \to I_{\xi 63}^{(su)} \to I_{\xi 64}^{(su)} \tag{20}$$

The following word combinations will correspond to the stochastic indices $I_{\xi ij}^{(su)}$:

$I_{\xi 52}^{(su)}$ = (disorders in the file structure)
$I_{\xi 53}^{(su)}$ = (occur)
$I_{\xi 54}^{(su)}$ = (on the hard disc)
$I_{\xi 55}^{(su)}$ = (as a result of failure)
$I_{\xi 551}^{(su)}$= (voltage in the mains)
$I_{\xi 62}^{(su)}$ = ("Disc check" routine)
$I_{\xi 63}^{(su)}$ = (is used)
$I_{\xi 64}^{(su)}$ = (to find out)
$I_{\xi 65}^{(su)}$ = (logical error)
$I_{\xi 651}^{(su)}$ = (in such case).

On the basis of said stochastically indexed semantic structures, the stochastically indexed semantic structure including all request word combinations $I_{\xi ij}^{(su)}$ will be set up according to the above-described procedure. As the basis, selected is the structure $I_{\xi 3}^{(p)}$ that includes the reply word group $I_{\xi 32}^{(su)}$ corresponding to the interrogative word combination $I_{\xi 31}^{(p)}$. Identity (as exact as word stems) of the following word combinations is taken into account:

$$I_{\xi 02}^{(su)} = I_{\xi 31}^{(su)} = I_{\xi 64}^{(su)}$$

$$I_{\xi 03}^{(su)} = I_{\xi 33}^{(su)}$$

$$I_{\xi 04}^{(su)} = I_{\xi 44}^{(su)}$$

$$I_{\xi 04}^{(su)} = I_{\xi 45}^{(su)}$$

$$I_{\xi 041}^{(su)} = I_{\xi 55}^{(su)}$$

$$I_{\xi 051}^{(su)} = I_{\xi 551}^{(su)}$$

$$I_{\xi 12}^{(su)} = I_{\xi 22}^{(su)} = I_{\xi 42}^{(su)}$$

$$I_{\xi 24}^{(su)} = I_{\xi 52}^{(su)} \tag{21}$$

As a result, said stochastically indexed structure will have the following form:

$$I_{\xi 0}^{(p)} : I_{\xi 32}^{(su)} \to I_{\xi 33}^{(su)} \to I_{\xi 34}^{(su)} \wedge I_{\xi 35}^{(su)} \to I_{\xi 24}^{(su)} \to I_{\xi 55}^{(su)} \wedge I_{\xi 551}^{(su)} \to I_{\xi 35}^{(su)} \to I_{\xi 44}^{(su)} \wedge$$

$$I_{\xi 45}^{(su)} \tag{22}$$

Taking into account the fact that said identity of the corresponding indices and the fact that relationships between indices in the given semantic structure have the gender-aspect and causal nature, the following structure will be obtained using a logical conclusion:

$$I_{\xi 0}^{(p)} : I_{\xi 32}^{(su)} \wedge I_{\xi 02}^{(su)} \to I_{\xi 03}^{(su)} \to I_{\xi 04}^{(su)} \wedge I_{\xi 05}^{(su)} \wedge I_{\xi 041}^{(su)} \wedge I_{\xi 051}^{(su)} \tag{23}$$

Thus, the stochastically indexed semantic structure of the brief reply will be set up to read as the text: ***"The "Disc check" routine is used when computer operation is terminated incorrectly as a result of voltage failure in the mains."***
The obtained brief reply, after the ***"Disc check" routine"*** reply word group has been replaced with the interrogative word combination of ***"What program"*** will be identical to the request: ***"What program is used in case of***

***incorrect computer operation termination as a result of voltage failure in the mains?".*** This is the criterion of relevancy of the obtained brief reply to the request. Therefore, the obtained brief reply may be outputted to the user.

To generate the complete reply on the basis of the pre-selected paragraph or the obtained text fragment, selected are only the sentences that were involved in the logical conclusion in generation of the brief reply sentence. The sentences of said paragraphs or text fragments are arranged in sequences caused by the logical links. The order of the logical links is the same as the one used for ascertaining the semantic linking between the request word combinations. These word combinations, comprised by different sentences, are related to the same request word combinations that are comprised by the sentence having the reply word group and the main word of the interrogative word combination. The order of succession of the sentence concatenations is determined by the succession order of the request word combinations corresponding to said concatenations in the previously generated brief reply To provide agreement of the sentences, generation of the complete reply may involve equivalent transformations of some sentences by replacement of speech parts or sentence members, not causing a change in the meaning of said sentences. If equivalent transformations of a sentence require replacement of prepositions, the same are replaced taking into account the characteristics the speech parts must have when being combined with particular prepositions. If necessary, cases of said speech parts may be replaced for agreement among nouns or adjectives, pronouns or participles with new prepositions. For that purpose the appropriate rules are applied to connect a preposition with the cases, wherein said speech parts agree with the given preposition.

If an interrogative word or word combination of a request (how? in what manner?) presumes not a brief one-sentence reply, but a sequence of steps or descriptions of a process or phenomenon, in such case the brief reply may be worded as a commencing sentence comprising a word group of the reply of the following type: "as follows", "thus". Then the subsequent sentences of the reply will disclose the contents of a sequence of steps or descriptions that include the reply with a required completeness. If such typical word group of the reply is not present, the same can be additionally introduced to generate the commencing sentence. Thereafter the reply word group in the commencing sentence will be adopted as the starting topic for the future complete reply. Further, using the logical conclusion, selected is a sequence of sentences of one or more paragraphs that constitute a set of semantically connected sentences of a complete reply to a given user's question. Boundaries of the reply will be determined by a continuous concatenation of the logically linked sentences, which concatenation will end upon completion of one of paragraphs, if the topic of the last sentence of said paragraph is not connected to the comment of the first sentence of the next paragraph. After the text fragment comprising the complete reply including the commencing sentence has been generated, said fragment will be outputted to the user.

This method, as developed herein, can be suitably used for synthesizing a self-instructing system for extracting knowledge from textual documents for use in search systems in a given foreign language. The automatic instruction of the system on rules of morphological, syntactical and semantic analysis is effected according to the above-discussed procedure using the stochastically indexed linguistic texts in the given foreign language. The derived rules, also presented in the given foreign language, are stochastically indexed and written into the corresponding knowledge bases 12 - 14 of morphological, syntactical and semantic analysis. The database 7 of stochastically indexed dictionaries of base and new words, as well as the databases 10 of stochastically indexed textual documents are generated in the given foreign language.

After said data and knowledge bases have been generated according to the above-described procedure, requests of users are transformed in the given foreign language, and fragments of textual documents of the required topics are preliminarily selected. Then data of textual document fragments are subjected to equivalent transformations; stochastically indexed semantic structures are generated, and a logical conclusion is educed using said structures to generate a brief reply relevant to a request in a given foreign language.

The method developed herein can also be suitably used to synthesize a self-instructing system for extraction of knowledge from textual documents for use in search systems in any of a plurality of given foreign languages. For that purpose, used is the above-described self-instruction mechanism in the form of a stochastically indexed artificial intelligence system based on application of unique combinations of binary signals of stochastic indices for stochastic indexing and search for linguistic text fragments in a given base language, which fragments comprise description of grammatical and semantic analysis. This mechanism provides an automatic self-instruction of the system on rules of grammatical and semantic analysis by way of equivalent transformations of stochastically indexed fragments of a text in any of given foreign languages, a logical conclusion and generation of linked semantic structures from said fragments, stochastic indexing of said structures to be represented in the form of production rules.

At first, using the above-described mechanism, carried out are morphological analysis and stochastic indexing of linguistic texts in a given base language, in the electronic form, with simultaneous instruction of the system on morphological analysis rules. This is done simultaneously with creation of the database 7 of stochastically indexed dictionaries and tables of indices of linguistic texts of the database 8 for each of the given foreign languages, as well as by creation of the knowledge base 12 of morphological analysis that comprises derived production rules for the given base language and each of the given foreign languages.

Then carried out are the morphological analysis and the syntactical analysis, as well as stochastic indexing of the textual documents in respect of a given topic in each of given foreign languages, in the electronic form, from a search system. Then tables of indices of textual documents of a given theme are formed, and they are stored in the database 10 of stochastically indexed texts, with simultaneous automatic instruction of the system on syntactical analysis rules. Said instruction is implemented according to the foregoing procedure using stochastically indexed linguistic texts in the given base language. Then created is the knowledge base 13 of syntactical analysis for the base language and each of given foreign languages.

Then carried out is semantic analysis of stochastically indexed textual documents for the given theme in the given base language, in the electronic form, with simultaneous automatic instruction of the system on semantic analysis rules and creation of the knowledge base 14 of semantic analysis for the base language and each of given foreign languages.

Upon completion of the knowledge bases 11, 12, the system proceeds from the automatic self-instruction mode to the users' requests processing mode. In so doing, a user's request is generated in a natural given foreign language, and the request is presented in the electronic form after stochastic indexing thereof in the form of an interrogative sentence that includes an interrogative word combination and word combinations defining the request semantics. Then, using the above-described procedure, the user's request in the stochastically indexed form is transformed into a plurality of new requests equivalent to the original request in the given foreign language. Then, according to the user's request, stochastically indexed fragments of textual documents, in the given foreign language in the electronic form, that comprise all word combinations of the transformed request, are preselected. With the use of said textual document fragments, a stochastically indexed semantic structure is generated. Basing on the generated stochastically indexed semantic structure, using the logical conclusion providing a link between stochastically indexed elements of various texts, and with the use of equivalent transformation of texts, generated is a brief reply that comprises stochastically, indexed word combinations defining the request semantics and also the reply word group corresponding to the request interrogative word combination. The correctness of the brief reply is ensured by generation of several identical stochastically indexed semantic structures on the basis of different Pre-selected stochastically indexed fragments of textual documents.

The relevancy of the obtained brief reply to the request is checked by replacing the reply word group with the corresponding interrogative stochastically indexed word combination, generating a stochastically indexed interrogative sentence, comparing the obtained interrogative sentence with the request. Basing on comparison of said sentences, when the obtained interrogative sentence and the request turn out to be identical, the decision is made that the brief reply is relevant to the request, and the reply is presented to the user in the given foreign language.

Consider another version of applying the method for synthesizing a self-instructing system that provides simultaneous extraction of knowledge from textual documents in any of given foreign languages. In this case, first, the system is automatically instructed, according to the above-described procedure, on rules of morphological, syntactical and semantic analysis using stochastically indexed linguistic texts in a given base language. The stochastically indexed linguistic texts database 8 includes educational-instructional handbooks to learn each of given foreign languages on the basis of the selected base language. In the database 11 of stochastically indexed dictionaries of foreign words written are dictionaries providing a direct and reverse translation of separate words from the base language to any of given foreign languages. Then the database 7 of stochastically indexed dictionary and knowledge bases 12-14 of morphological, syntactical and semantic analysis in the given base language are created. After that, the automatic self-instruction mode control subsystem 3 automatically generates requests to said databases and knowledge bases for preliminary selection of linguistic text fragments in the base language, which fragments would contain the knowledge needed for learning each of given foreign languages. Then the texts are subjected to equivalent transformations, stochastically indexed semantic structures are generated, and a logical conclusion according to predetermined structures to generate replies relevant to automatic requests is educed. These replies are used to derive production rules of morphological, syntactical and semantic analysis of textual documents for each foreign language. For example, if the base language is Russian, then the knowledge base of syntactical analysis for learning the English, among automatically derived rules may include the following ones:

1. If a noun without a preposition is positioned in the beginning of a sentence,
and said noun is positioned prior to a noun having the **of (in, from)** preposition,
and said noun is followed by a verb,
then the first noun is the substantive.
For example: **The work of the engineer is on the table.**

2. If a word combination consists of a verb-copula (**to be verb** in a personal form) and a nominal part expressed by an adjective,
then this word combination is a composite nominal predicate.
Example: **The tree is big.**

The derived rules, after stochastic indexing, are written into the knowledge bases 12-14 of morphological, syntactical and semantic analysis to provide extraction of knowledge from textual documents in a given foreign language as requested by users. Creation of the database of stochastically indexed dictionaries and tables of indexed textual documents with respect to given tropics is done using a corresponding foreign language. It is noted that in semantic analysis of textual documents with respect to predetermined topics in a required foreign language, for determining a semantic link type, some word combinations are translated using the database 11 of stochastically indexed foreign word dictionaries into the base language. Such word combination, using the logical conclusion, according to the tables of indices of the base language reference dictionaries, are correlated with one of types of semantic relations whose indices are written in the interpreter 4 of stochastically indexed texts and production rules. This allows to use semantic analysis to specify, according to the above-described procedure, the correspondence of words to speech parts, and determine a type of relations between word combinations when a stochastically indexed semantic structure of a reply to a request is generated.

Using said databases and knowledge bases, users' requests are subjected to the equivalent transformation in given foreign languages by commands from the self-instruction and knowledge extraction mode control subsystem 3. Then fragments of textual documents are preselected in respect of given topics; their equivalent transformations are carried out, stochastically indexed semantic structures are generated and a logical conclusion upon said structures is derived.. This ensures that replies relevant to user's requests in each of given foreign languages will be prepared.

If in the course of request processing it is found out that the search system must be referred to for entering new textual documents in a foreign language for a given topic, then the self-instruction and knowledge extraction mode control subsystem 3 initiates the multi-lingual linguistic processor 1. The processor receives the command to enter new documents in the base language, which command specifies the topic and the name of the foreign language. The multilingual linguistic processor 1, using the database 11 of stochastically indexed foreign language dictionaries, selects a required dictionary and translates words denoting the topic name into the appropriate foreign language. Basing on the received information, the multilingual linguistic processor 1 prepares a formalized request in the given language to the search system so that to enter new foreign language documents relating to the topic concerned. Said documents are delivered to the subsystem 2 for stochastic indexing of textual documents and separating-out text fragments for the above-mentioned processing, and for storing them in the database 10 of stochastically indexed textual documents.

Industrial Applicability

The inventive method for synthesizing a self-instructing system for extracting knowledge from textual documents for use in search systems can be used for creation of a global Internet-based knowledge industry, using multilingual systems for extracting knowledge from texts. Realization of this teaching will provide a qualitatively novel informational service in various fields of human activities: industrial, scientific, educational, cultural - in view of contemporary requirements of development of a civilized society. The other promising direction for industrial application of the method is the mobile systems (the mobile Internet). Said direction will be supported by the possibility to create intelligent information-search systems that will allow to extract particular knowledge and data from great amounts of Internet-stored textual documents by users' requests, with minimal time to be spent for transmission and reception of information needed by users. The user can enter requests in the system in a natural language and in a speech form. An important direction of industrial application of the claimed method consists in creating a new generation of intelligent instructing systems in various subject-matters and problem spheres.

Table 1.

| A sentence frame | |
|---|---|
| Questions to simple sentences | Questions to simple sentences are generated basing on the syntactical analysis knowledge base |
| Denomination of simple sentences comprised by the complex or compound sentences | Characteristics of simple sentences |
| Questions to groups of sentence members | Questions to groups of sentence members are generated basing on the questions to the sentence members being a base of a given group |

# EP 1 508 861 A1

Table 1. (continued)

| A sentence frame | |
|---|---|
| Denominations of groups of sentence members | Groups of: |
| | Predicate |
| | Object |
| | Adverb |
| | Separate members of sentence |
| | Parenthetic words, word combinations and parenthetic structures |
| Questions to members of sentence | According to a dictionary format (inclusive of prepositions) and to table of translation of the questions to speech parts into the questions to sentence members |
| Denominations of sentence members | Substantive, |
| | Predicate (simple verbal, composite verbal, composite nominal), |
| | Attribute (agreed, non-agreed), |
| | Object (direct, indirect), |
| | Adverbial modifier (of manner, place, time, measure or degree, cause, purpose, condition, concession) |
| Questions to speech parts | According to a dictionary format |
| Speech parts and their characteristics | According to a dictionary format |
| Word | In a sentence context |
| Stochastic indices of word stems | Are calculated according to a special algorithm or separated out of a dictionary format |

Table 2.

| Text Indices | | | | |
|---|---|---|---|---|
| Indices of word stems | Indices of paragraphs | | | |
| | $I_{\xi 1}^{(a)}$ | $I_{\xi 2}^{(a)}$ | … | $I_{\xi n}^{(a)}$ |
| $I_{\xi 1}^{(u)}$ | $I_{\xi 11}^{(s)}$ | $I_{\xi 12}^{(s)}$ | … | $I_{\xi 1n}^{(s)}$ |
| $I_{\xi 2}^{(u)}$ | $I_{\xi 21}^{(s)}$ | $I_{\xi 22}^{(s)}$ | … | $I_{\xi 2n}^{(s)}$ |
| … | … | … | … | … |
| $I_{\xi m}^{(u)}$ | $I_{\xi m1}^{(s)}$ | $I_{\xi m2}^{(s)}$ | … | $I_{\xi mn}^{(s)}$ |

Table 3.

| Indices of Texts Pertaining to a Given Topic | | | | |
|---|---|---|---|---|
| Indices of word stems | Indices of paragraphs | | | |
| | $I_{\xi 1}^{(t)}$ | $I_{\xi 2}^{(t)}$ | … | $I_{\xi n}^{(a)}$ |
| $I_{\xi 1}^{(u)}$ | $I_{\xi 11}^{(s)}$ | $I_{\xi 12}^{(s)}$ | … | $I_{\xi 1n}^{(s)}$ |
| $I_{\xi 2}^{(u)}$ | $I_{\xi 21}^{(s)}$ | $I_{\xi 22}^{(s)}$ | … | $I_{\xi 2n}^{(s)}$ |
| … | … | … | … | … |

Table 3.   (continued)

| Indices of Texts Pertaining to a Given Topic | | | | |
|---|---|---|---|---|
| **Indices of word stems** | **Indices of paragraphs** | | | |
| | $I_{\xi 1}{}^{(t)}$ | $I_{\xi 2}{}^{(t)}$ | ... | $I_{\xi n}{}^{(a)}$ |
| $I_{\xi m}{}^{(u)}$ | $I_{\xi m1}{}^{(s)}$ | $I_{\xi m2}{}^{(s)}$ | ... | $I_{\xi mn}{}^{(s)}$ |

## Claims

1. A method for synthesizing a self-learning system for extraction of knowledge in a given natural language from textual documents for use in search systems, comprising the following steps:

   providing a self-learning mechanism in a form of a stochastically indexed artificial intelligence system, which system is based on application of unique combinations of binary signals of stochastic information indices;
   automatically instructing the system on grammatical and semantic analysis rules by using equivalent transformations of stochastically indexed text fragments and a logical conclusion, and by forming a linked semantic structures from said fragments and stochastic indexing them for representation in a form of production rules;
   carrying out a morphological analysis and a stochastic indexing of linguistic documents in an electronic form in said language, with simultaneous automatic instructing the system on morphological analysis rules;
   carrying out a morphological and a syntactical analysis, and a stochastic indexing of textual documents in the electronic form, pertaining to a given theme, in said language, with simultaneous automatic instructing the system on syntactical analysis rules;
   carrying out a semantic analysis of the stochastically indexed textual documents in the electronic form, pertaining to the given theme, with simultaneous automatic instructing the system on semantic analysis rules;
   forming a user's request in the given natural language and transforming it in the electronic form after stochastically indexing thereof as an interrogative sentence;
   transforming the user's request in a stochastically indexed form into a set of new requests equivalent to said user's request;
   carrying out a preliminary selection, based on the user's request, stochastically indexed fragments of textual documents in the electronic form, comprising all word combinations of said new requests;
   generating a stochastically indexed semantic structure from said stochastically indexed fragments of textual documents;
   basing on said structure, generating a brief reply from the system by the logical conclusion providing a link between stochastically indexed fragments of textual documents, and equivalent transformation of texts;
   checking a relevancy of said brief reply to the user's request by generating an interrogative sentence from said brief reply, and comparing generated interrogative sentence with the user's request;

   wherein when the generated interrogative sentence is identical to the user's request, confirming the relevancy of said brief reply to the user's request, and presenting said brief reply to the user in the given natural language.

2. A method for synthesizing a self-learning system for extraction of knowledge in any given natural language from textual documents for use in search systems, comprising the following steps:

   providing a self-learning mechanism in a form of a stochastically indexed artificial intelligence system, which system is based on application of unique combinations of binary signals of stochastic information indices for stochastic indexing and search for linguistic texts fragments in a given base language, comprising description of grammatical and semantic analysis procedures, and automatically instructing the system on grammatical and semantic analysis rules by using equivalent transformations of stochastically indexed linguistic text fragments and a logical conclusion, and by forming linked semantic structures from said fragments and stochastic indexing said structures for representation in a form of production rules;
   carrying out a morphological analysis and a stochastic indexing of linguistic documents in an electronic form in the given base language, while simultaneous automatic instructing the system on morphological analysis rules, building a database of stochastically indexed dictionaries and tables of linguistic text indices for each given foreign language, and a knowledge base of morphological analysis, containing production rules for the base language and each given foreign language;
   carrying out a morphological and a syntactical analysis, and a stochastic indexing of textual documents in the electronic form, on a given theme, in each given foreign language, from the search system, representing said documents as tables of indices of textual documents and storing said documents in bases of stochastically indexed texts, while simultaneous automatically instructing the system on syntactical analysis rules using the stochastically indexed linguistic texts in the base language, and building a knowledge base of syntactical analysis for the base language and each given foreign language;

carrying out a semantic analysis of said stochastically indexed textual documents in the electronic form, on the given theme, with simultaneous automatically instructing the system on semantic analyses rules, and building a knowledge base of semantic analysis for the base language and each given foreign language;

forming a user's request in a natural foreign language and transforming it in the electronic form after the stochastic indexing thereof as an interrogative sentence including an interrogative word combination and word combinations determining semantics of the user's request;

transforming the user's request in a stochastically indexed form into a set of new requests equivalent to said user's request;

carrying out a preliminary selection, based on the user's request, stochastically indexed fragments of textual documents in the electronic form, comprising all word combinations of said new requests;

generating a stochastically indexed semantic structure from said stochastically indexed fragments of textual documents;

basing on said structure, generating a brief reply from the system by the logical conclusion providing a link between stochastically indexed fragments of textual documents, and equivalent transformation of the text, which reply contains stochastically indexed word combinations defining the user request semantics, and a reply word group, corresponding to the interrogative word combination of the user request;

checking a relevancy of said brief reply to the user's request by replacing the reply word group by the corresponding stochastically indexed interrogative word combination, and comparing a generated interrogative sentence with the user's request;

wherein when the generated interrogative sentence is identical to the user's request, confirming the relevancy of said brief reply to the user's request, and presenting said brief reply to the user in the given foreign language.

3. The method as claimed in claims 1 or 2, further comprising requesting, in the case of a failure to generate the interrogative sentence identical to the user request, from the search system new textual documents to search for a reply to be relevant to the user's request.

4. The method as claimed in any one of claims 1-3, further comprising, generating, by a user's request, a complete reply comprising a more detailed information or a particular knowledge by means of the logical conclusion to form the stochastically indexed semantic structure, and necessary equivalent transformations of said textual document fragments to obtain a new stochastically indexed text providing more detailed content of said brief reply.

5. The method as claimed in claims 1 or 2, wherein the step of automatic instructing the system on morphological analysis rules includes selecting, in a stochastically indexed text, a predetermined set of word forms of each of the words, providing stochastic indices of a word stem and a predetermined set of its endings, prefixes, suffixes and prepositions randomly accessing according to said indices to the stochastically indexed linguistic texts, selecting therefrom fragments associating said set of endings, prefixes, suffixes and prepositions with a speech part corresponding to a word; as well as with a complete set of endings, prefixes, suffixes and prepositions resulting from a word declination or conjugation, transforming said fragments into the form of production rules by stochastic indexing, wherein correctness of each of the rules being provided by autonomous derivation on the basis of several fragments from corresponding linguistic texts, and obtaining a table of indices of production rules for the knowledge base of morphological analysis.

6. The method as claimed in any one of claims 2-5, wherein the step of stochastic indexing of linguistic texts, after determining the speech part of each word using rules of knowledge base of morphological analysis, includes filling the stochastically indexed database of dictionaries with stochastic indices of each word stem and those of the complete set of its endings, prefixes, suffixes and prepositions.

7. The method as claimed in any one of claims 2-6, wherein the step of building tables of text indices includes stochastic transforming of information and generating unique binary combinations of indices of word stems, their endings, prefixes, suffixes, prepositions, sentences, paragraphs and text titles, which indices are placed in the tables of indices of the base of stochastically indexed texts, and providing linking between said indices, which linking being specified in an original text and ensuring text recovery using the table of indices.

8.  The method as claimed in claims 1 or 2, wherein the step of automatically instructing the system on rules of syntactical analysis includes searching, in the stochastically indexed linguistic texts, for fragments describing a procedure of syntactical analysis of sentences; taking logical conclusion to obtain the stochastically indexed semantic structure defining the link between syntactic elements and structures and words' predetermined speech parts; deriving production rules specifying the syntactical analysis of sentences in respect of morphological word characteristics, wherein correctness of each of the rules being provided by autonomous derivation based on several fragments from corresponding linguistic texts, storing the resulted rules in the knowledge base of syntactical analysis, being stochastically indexed and represented in the form of the table of indices.

9.  The method as claimed in claims 1 or 2, wherein the step of automatic instructing the system on the rules of semantic analysis further includes forming a request to tables of indexes of linguistic texts with reference to stochastic indices of word stems and speech parts, sentence members not exactly defined, and obtaining a reply as a text fragment describing semantic characteristics to be possessed by the words to conform with a particular sentence member; and, according to said reply, referring, using a stochastic index of a given word stem and required semantic characteristics, to the tables of indexes of general-use or special dictionaries and encyclopaedias; and, by logical conclusion, making an attempt to specify the stochastically indexed semantic structure linking the given word and required semantic characteristics; and, if the attempt is successful, deciding that said sentence member is determined exactly; transforming the text fragment relevant to the request into the production rule, wherein correctness of each of the rules being provided by autonomous derivation based on several fragments from corresponding linguistic texts, storing said rule in the knowledge base of semantic analysis, being stochastically indexed and represented in the form of the table of indices to be used in the semantic analysis of words as sentence members, and links between word combinations.

10. The method as claimed in any one of claims 2-9, further comprising, after the index table of each text has been generated and said text has been morphologically, syntactically and semantically analyzed, generating stochastic indices of speech part names, sentence members and questions to them corresponding to each word within each of the sentences and entering said indices into the tables of indices of said text to provide automatically determining, in the search for text fragments, what speech part and sentence member each of the words belongs to, and to state questions to said word.

11. The method as claimed in any one of claims 2-10, further comprising, after all tables of indices of texts have been generated, generating a table of indices for a given theme, wherein rows are designated by non-repeating stochastic indices of word stems, and each column corresponds to a stochastic index of particular text; and entering into said table stochastic indices of text paragraphs containing a word with a particular stem index, which table of indices for the given theme being used for a preliminary search for fragments comprising a predetermined set of word combinations of the user's request.

12. The method as claimed in any one of claims 1-11, wherein the step of equivalent transforming of the user's request includes using synonyms, words having approximately the same meaning, and replacement of speech parts and sentence members with preserving the meaning of the user's request, on the basis of stochastically indexed rules of the morphological, syntactical and semantic analysis to provide equivalent structures of word combinations of the interrogative sentence of the user's request and to maintain the semantic relationship therebetween.

13. The method as claimed in any one of claims 1-12, wherein the step of generating the semantically linked text fragments comprising all word combinations of the user's request includes referencing, according to stochastic indices of said word stems, to the table of text indices in respect of the given theme, selecting stochastic indices of paragraphs and corresponding texts comprising all word combinations of the user's request, referencing, according to said indices, to the table of indices of each of the selected texts; making the logical conclusion based on the tables of indices and the equivalent transformations of texts to produce a stochastically indexed semantic structure linking indices of the word groups of the reply corresponding to the interrogative word combination of the user request, and all word combinations of the user's request that define the semantics of the user's request and comprised by the pre-selected paragraphs.

14. The method as claimed in claim 13, further comprising using the stochastically indexed semantic structure, successfully produced by the logical conclusion and correspondent to the user's request, as a basis to generate, using the obtained set of text fragments, an interrogative sentence identical to the user's request; generating said interrogative sentence by the equivalent transformation of stochastic indices of the word stems and word endings, suffixes, prefixes and prepositions based on rules from said knowledge bases to provide required semantic characteristics of each word combination of textual fragments of the user's request, and using the logical conclusion based on transitive relationships between word combinations to combine them into the interrogative sentence that is identical to the user's request and comprises the word group of the replay, corresponding to the interrogative word combination. of the user's request.

**15.** The method as claimed in any of claims 1-14, wherein the correctness of the brief reply being ensured by generation of several identical stochastically indexed semantic structures of said reply on the basis of various pre-selected stochastically indexed fragments of textual documents.

**16.** The method as claimed in any of claims 1-15, further comprising, during the search process and the generation of the reply using tables of indices of textual documents, self-learning of the system by generation indexed textual elements linking the request and the relevant brief reply to produce a knowledge base comprising elements of the type "request-reply", which upon stochastic indexing, is presented in the form of tables of indices and is used for grammatical and semantic analysis of sentences of the text and for generation of replies to repeated requests contained in said indexed knowledge base.

**17.** The method as claimed in any of claims 4-16, wherein the step of generating the complete reply containing the knowledge relevant to the user's request on the basis of the brief reply and with the aid of a logical conclusion according to the tables of indices used when obtaining a text fragment, comprising generating a stochastically indexed semantic structure linking a word group of the replay to the stochastic indices of word stems of the sentences, and this linking maintains the transitive relationship providing complete disclosure of the brief reply within the text fragment to obtain a linked text of the complete reply using equivalent transformations of sentences on the basis of said stochastically indexed semantic structure.

**18.** The method as claimed in any of claims 1-17, wherein the equivalent transformation of the stochastically indexed fragments comprises representing each sentence as a set of stochastically indexed word combinations, transforming said combinations using rules stored in the knowledge bases of morphological, syntactical and semantic analyses by means of equivalent transformation of stochastic indices of common root word stems, word endings, prefixes, suffixes and prepositions to produce new speech parts or sentence members, with provision of the constancy of the links between word combinations in the stochastically indexed semantic structure of each sentence, and the concordance between sentences when new text fragments are generated.

**19.** The method as claimed in any of claims 1-18, further comprising, when a new word emerges in the indexed text in the process of stochastic indexing of textual documents, which word is not contained in the dictionary of stochastically indexed words or in the linguistic texts, retrieving a common root word with respect to the new word in the dictionary and a rule for the equivalent transformation of said common root word into the new word in the knowledge base of morphological analysis; determining, by an equivalent transformation type, the speech part which the new word belongs to and all its word forms produced by declination or conjugation,
and if no common root words found in the dictionary, selecting from the text a particular set of word forms of the new word, and determining based on endings, suffixes and prefixes of said word forms, using the stochastically indexed dictionary or products rules of the morphological analysis, the speech part which said new word belongs to, and the complete set of its word forms produced by declination or conjugation.

**20.** The method as claimed in any of claims 2-19, further comprising simultaneous extracting of knowledge from the textual documents in given foreign languages, said simultaneous extracting includes
automatic instructing the system in the rules of the morphological, syntactical and semantic analyses with respect to the given base language;
building a database of stochastically indexed dictionary and knowledge bases of morphological, syntactical and semantic analysis using stochastically indexed linguistic texts in a given base language;
automatic generating, using said bases, requests for automatic instruction of the system in any of given foreign languages,
preliminary selecting, according to said requests, linguistic texts fragments in the base language, which fragments contain the knowledge necessary for learning said foreign language,
performing equivalent transformation of said texts;
generating stochastically indexed semantic structures and making logical conclusions on said structures to generate replies relevant to the automatically generated requests,
using said replies for generating knowledge base of morphological, syntactical and semantic analyses for any of the given foreign languages, ensuring extraction of knowledge from textual documents in a given foreign language.

Interaction with a user

Interaction with
conventional
search systems
Internet

Multilingual linguistic processor **1**

Database of stochastically indexed dictionary of base and new words **7**

Subsystem for stochastic indexing of textual documents and selecting text fragments **2**

Database of stochastically indexed linquistic texts **8**

Subsystem for controlling self-learning and knowledge extraction mode **3**

Database of stochastically indexed textual documents corresponding to given theme **10**

Interpreter of stochastically indexed texts and production rules **4**

Database of stochastically indexed dictionary of foreign words **11**

Knowledge base of morphological analysis **12**

Subsystem for equivalent transformations of texts **5**

Knowledge base of syntactical analysis **13**

Subsystem of logical conclusion **6**

Knowledge base of semantic analysis **14**

"Request-reply" knowledge base **9**

Knowledge base of stochastically indexed word combinations **15**

## Fig. 1

## INTERNATIONAL SEARCH REPORT

| International application No. |
| --- |
| PCT/RU 02/00258 |

| A. | CLASSIFICATION OF SUBJECT MATTER **7** | G06F 17/30, G09B 19/00 |
| --- | --- | --- |

According to International Patent Classification (IPC) or to both national classification and IPC

| B. | FIELDS SEARCHED |
| --- | --- |

Minimum documentation searched (classification system followed by classification symbols) **7**

G06F 17/00, 17/20, 17/21, 17/27, 17/28, 17/30, 17/40, G09B 19/00

Documentation searched other than minimum documentation to the extent that such documents are included in the fields searched

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| A | NASIPNIY V.V. et al. Postroenie intellektualnoi informatsionnoi Poiskovoi systemi. Moskva, Prometei, 2001, p. 3-24 | 1-20 |
| A | NASIPNY V.V. et al. Rasvitie teorii postroenia otkrytikh system na osnove informatsionnoi tekhnologii iskusstvennovo intellekta. Moskva, voennoe isdatelstvo, 1994, p. 36-112 | 1-20 |
| A | (NAUCHNO-ISSLEDOVATELSKAYA I PROIZVODSTVENNAYA FIRMA "TEKHINTELL") 27.04.2001 | 1-20 |
| A | US 5787234 A (BRUCE G. MOLLOY) Jul. 28, 1998 | 1-20 |
| A | US 5454106 A (INTERNATIONAL BUSINESS MACHINES CORPORATION) Sep. 26, 1995 | 1-20 |

| ☐ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
| --- | --- |
| **03 February 2003 (03.02.03)** | **20 February 2003 (20.02.03)** |

| Name and mailing address of the ISA/**RU** | Authorized officer |
| --- | --- |
| | |
| Facsimile No. | Telephone No. |

Form PCT/ISA/210 (second sheet) (July 1992)